(19) **Europäisches Patentamt**
**European Patent Office**
**Office européen des brevets**

(11) **EP 2 732 348 B1**

(12) **EUROPEAN PATENT SPECIFICATION**

(45) Date of publication and mention
of the grant of the patent:
**22.06.2016  Bulletin 2016/25**

(51) Int Cl.:
**G05B 23/02** *(2006.01)*

(21) Application number: **11731400.5**

(86) International application number:
**PCT/EP2011/062168**

(22) Date of filing: **15.07.2011**

(87) International publication number:
**WO 2013/010569 (24.01.2013 Gazette 2013/04)**

(54) **METHOD AND APPARATUS FOR MONITORING AN OPERATIONAL STATE OF A SYSTEM ON THE BASIS OF TELEMETRY DATA**

VERFAHREN UND VORRICHTUNG ZUR ÜBERWACHUNG DES BETRIEBSZUSTANDS EINES SYSTEMS AUF DER GRUNDLAGE VON TELEMETRIEDATEN

PROCÉDÉ ET APPAREIL DE SURVEILLANCE DE L'ÉTAT OPÉRATIONNEL D'UN SYSTÈME SUR LA BASE DE DONNÉES TÉLÉMÉTRIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.05.2014  Bulletin 2014/21**

(73) Proprietor: **European Space Agency**
**75738 Paris Cedex 15 (FR)**

(72) Inventors:
• **MARTINEZ HERAS, José Antonio**
**64285 Darmstadt (DE)**
• **DONATI, Alessandro**
**64287 Darmstadt (DE)**

(74) Representative: **MERH-IP Matias Erny Reichl Hoffmann**
**Patentanwälte PartG mbB**
**Paul-Heyse-Strasse 29**
**80336 München (DE)**

(56) References cited:
**EP-A1- 2 284 769      WO-A1-2007/120785**
**US-A1- 2007 135 957**

• **KRIEGEL, H.-P. ET AL.: "LoOP: Local Outlier Probabilities", CIKM'09, 2 November 2009 (2009-11-02), XP002676700,**

## Description

### Technical Field of the Invention

The present invention relates to a method and an apparatus for monitoring an operational state of a system on the basis of telemetry data, wherein the operational state is either a first state or a second state, the second state being a state different from the first state, and particularly, though not exclusively, to a method and an apparatus for monitoring an operational state of a system on the basis of telemetry data, wherein the first state is a nominal operation state and the second state is an anomalous state.

The invention is particularly though not exclusively applicable to detecting anomalous or unexpected behavior of systems providing the telemetry data, such as spacecrafts or robots. Such spacecrafts may particularly relate to satellites or space probes, and such robots may particularly relate to planetary rovers.

### Background of the Invention

Commonly, telemetry data comprises time series data of one or more parameters of the system which provides the telemetry data. These parameters may be parameters affected by the operation of the system and/or parameters that affect the operation of the system. For instance, the telemetry data may relate to or be provided by spacecrafts such as satellites and space probes, or robots, such as a Mars rover. In a case in which the system is a spacecraft or robot, the telemetry data may comprise time series data of a plurality of parameters which are related to the operation of the spacecraft or the robot. Examples for such parameters relate to temperatures, pressures, voltages, currents, or the like. Also, the telemetry data may be provided by the system in real time, or the system may first store the telemetry data in an appropriate storage means of the system for a given period of time and only then provide the telemetry data.

In the above, time series data is understood as describing, for each of the plurality of parameters, a time series of the respective parameter over time, wherein the time series is a sequence of data points each reflecting the value of the respective parameter at a different given time. For example, the different times may be chosen such that the value of the respective parameter is reflected at subsequent, equidistant times. For instance, the time series of a parameter may be a sequence of data points, wherein each data point corresponds to one second of operation of the system. In other words, the time series of the respective parameter may indicate the value of the parameter detected with a given sample rate, for instance 1Hz, collected over a given period of time.

Generally, telemetry data relating to a spacecraft or a robot comprises time series data relating to a large number of parameters, for instance on the order of 20.000 to 40.000 parameters, such that the telemetry data comprises a large amount of data.

The telemetry data may be used to monitor the system to which the telemetry data relates, and to identify novel behavior in the operation of the system. In the following, novel behavior, or correspondingly a novel operation state, will be understood as an operation state of the system that differs from a nominal operation state of the system. A nominal operation state is understood as an operation state corresponding to the specifications of the system, or an operation state that is found to be nominal from previous experience. According to this definition, novel behavior may either relate to expected novel behavior of the system, or to an anomaly of the system. An anomaly of the system may relate to a malfunction of the system. On the other hand, expected novel behavior of the system does not relate to a malfunction of the system and therefore needs to be discriminated from an anomaly of the system. For example, novel behavior may relate to the system encountering external conditions that have changed. For instance, if a spacecraft performs a maneuver, the telemetry data may indicate novel behavior, which however could have been foreseen by the operating personnel. Therefore, in such a case, the novel behavior is neither unexpected nor does it relate to a malfunction. In some cases it is necessary to notify a detected novel behavior to operating personnel in order to determine whether the novel behavior relates to an anomaly or to expected novel behavior. In fact, in some instances, notification about novel behavior relating to expected novel behavior is a welcome confirmation of the expected novel behavior for operating personnel. As follows from the above, a method for detecting novel behavior inherently is also a method for detecting anomalies.

For spacecrafts or robots, timely anomaly detection is of great importance. Since spacecrafts and robots are typically remote-controlled, malfunctions need to be detected while they may still be resolved and while there is still contact to the spacecraft or robot. Furthermore, spacecrafts and robots typically are very expensive equipment which is dedicated to a specific purpose, and unnecessary downtime caused by late detection of malfunctions must be avoided under all circumstances. For example, satellites or space probes may be used to perform scientific experiments, and conducting these experiments during resolving a malfunction may not be possible.

Oftentimes, if the anomaly relates to a malfunction, resolving the anomaly is comparably easy if the anomaly is detected early. However, if the anomaly is not detected early and increases in severity, resolving the anomaly at later stages may be much more difficult, if not impossible.

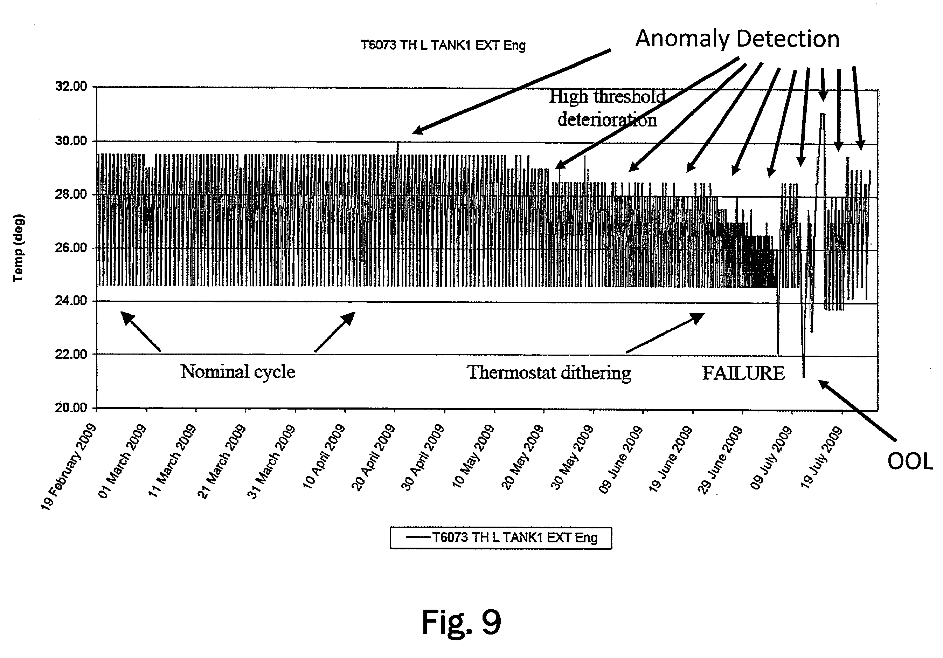

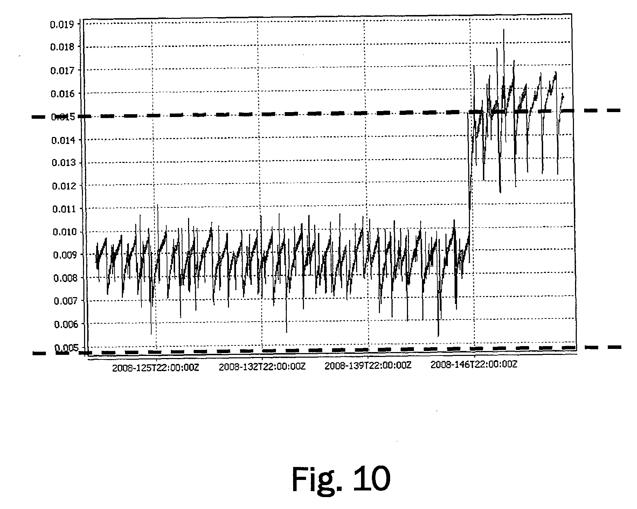

In the prior art, several methods for monitoring a system on the basis of telemetry data are known. A known method for detecting an anomaly of a system providing telemetry data is the out of limits (OOL) method, which is illustrated in **Figs. 9** and **10.** According to this method, upper and lower thresholds (limits) are manually set for a number of critical parameters. According to the OOL approach, these critical parameters need to be manually specified (i.e. selected from the plurality of parameters of the telemetry data) by operating personnel. In case one of the critical parameters exceeds the upper threshold or falls below the lower threshold, an alert is triggered.

**Fig. 10** shows a time series of a single parameter extending from a timing somewhat prior to 2008-125T22:00:00Z to a timing somewhat after 2008-146T22:00:00Z. A lower threshold for the parameter is set at a parameter value somewhat below 0.005, and an upper threshold for the parameter is set at a parameter value of 0.015. Closely after timing 2008-146T22:00:00Z the parameter value exceeds the upper threshold and an alert is triggered.

Detecting anomalies with the OOL method has a number of shortcomings and disadvantages. First of all, setting the upper and lower thresholds for each of the critical parameters incurs considerable engineering effort and requires detailed knowledge about the system providing the telemetry data and about the environment in which the system operates. Accordingly, setting the upper and lower thresholds requires input of theoretical assumptions which are, by nature, potentially defective. Furthermore, also the process of manually selecting the critical parameters is error-prone. For instance, a parameter which is considered as a non-critical parameter may turn out to be indicative of an anomaly, in which case the anomaly will not be detectable by the OOL method. Also, if a system providing telemetry data is operated for an extended period of time or in a changing environment, typical ranges for critical parameters may shift, such that the respective upper and lower thresholds of the critical parameters would have to be adjusted in order to avoid false triggering of alerts and/or loosing sensitivity for detecting anomalies. A further disadvantage lies in the fact that there are cases in which the system providing telemetry data may in fact be in an anomalous state although the critical parameters all are within their respective upper and lower thresholds. Such a case is illustrated in **Fig. 9.**

In **Fig. 9** a time series of a single parameter relating to a temperature of a tank aboard a satellite is shown. The time series extends from 19 February 2009 to a timing somewhat after 19 July 2009. A lower threshold for the parameter is set at a temperature of 22.00 degrees. Between 19 February 2009 and 10 May 2009 the value of the parameter is observed to fluctuate between about 24.5 degrees and about 29.5 degrees. Around 10 May 2009 the observed maximum values of the fluctuation of the parameter value start to deteriorate, indicating-with the benefit of hindsight-that an anomaly has been present in the satellite from that time on. However, a first OOL alarm was not triggered before 09 July 2009. This example illustrates that in certain cases detection of anomalies may occur unnecessarily late when the OOL method is employed.

A further prior art method for monitoring a system providing telemetry data and for detecting anomalies of the system is to compare vectors which are formed by sets of selected parameters, and which are interpreted as points in a corresponding vector-space, to areas (more-dimensional volumes) in the vector space that have been determined as areas relating to a nominal behavior of the system providing the telemetry data. In more detail, according to this so-called clustering method, a set of parameters to be monitored is manually selected (by operating personnel) from the plurality of parameters comprised by the telemetry data. These selected parameters then are arranged as a vector, which is interpreted as a point in a vector space having a dimensionality corresponding to the number of manually selected parameters. Archived data of the system providing the telemetry data is analyzed in order to (manually) identify areas in which the vector of chosen parameters is expected to fall during nominal operation of the system. This determination of "nominal areas" involves modeling of nominal behavior of the system and requires input of theoretical assumptions on the operation of the system. During the actual monitoring of the system, the vector of the selected parameters obtained from the telemetry data is compared to the areas obtained from the analysis of the archived telemetry data, and in case the vector does not fall into one of these areas, a value indicating the distance of the vector from the closest of these areas is returned. This distance may be determined by a distance metric such as the Euclidean distance metric. If the value indicating this distance exceeds a given value, an alert is triggered, on occasion of which an investigation may be performed whether or not an anomaly of the system is present.

Also the clustering method described above has a number of drawbacks, which may be traced back to the facts that the parameters considered for monitoring are selected manually, that areas relating to nominal behavior are modeled manually and that the relevant considered quantity is a distance between a vector of parameters and the closest nominal area.

Since the parameters to be considered for monitoring are selected manually, the method relies on a sensible choice of these parameters. Typically, manual selection is based on models and theoretical assumptions as to in which parameters an anomaly of the system is most likely to manifest itself. Therefore, the same problems as outlined for the OOL method with respect to the selection of critical parameters apply, namely that anomalies may not be detected because they do not affect the parameters that have been manually selected for monitoring. Moreover, owing to manual selection of parameters and manual modeling of nominal areas, which both incur significant engineering effort, the method is limited to considering a relatively small number of parameters for monitoring. In this regard it is noted that the notion of a distance between vectors and areas in a space becomes more and more arbitrary with growing number of dimensions, that is, all points seem more and more equidistant ("curse of dimensionality"), which puts another constraint on the number of parameters that may be considered by this method.

Since the above method relies on distances between, respectively, a vector of parameters and nominal areas in the vector space, the problem may arise that a vector that lies apart from an area indicating nominal behavior may in fact relate to nominal behavior, while a vector that lies within such an area, but close to a boundary, may in fact relate to an anomaly.

Accordingly, many false anomaly alerts may be triggered by this method, while on the other hand, it makes some anomalies not detectable.

Additionally, the manually selected parameters oftentimes have very different ranges of possible values, such that normalization operations become necessary. Such is for instance the case if a parameter indicating a pressure and a parameter indicating a current are manually selected to be monitored. Thus, using the clustering method, the process of determining whether or not a given vector of selected parameters corresponds to nominal behavior or not may require additional computing effort and may be time consuming.

Patent document EP 2 284 769 A1 relates to a method and an apparatus for determining which one or more time series parameters of a plurality of time series parameters relating to operation of a system are correlated with a first operation state of the system. The method comprises providing time series data including data relating to a time series of each of the plurality of time series parameters, determining at least two first time periods, wherein the system is in the first operation state during the at least two first time periods, determining at least one second time period, wherein the system is in a second operation state during the at least one second time period, determining, for each respective time series parameter of the plurality of time series parameters, a first characteristic parameter relating to a first characteristic of the time series of the respective time series parameter for each of the at least two first time periods and the at least one second time period, and determining which one or more time series parameters of the plurality of time series parameters relating to the operation of the system are correlated with the first operation state of the system by determining, for each respective time series parameter of the plurality of time series parameters, whether or not the respective time series parameter is correlated with the first operation state of the system based on the first characteristic parameters of the respective time series parameter determined for each of the at least two first time periods and the at least one second time period.

**Summary of the Invention**

It is an object of the present invention to overcome the limitations of the prior art methods for monitoring a system and for detecting anomalies of the system. It is a another object of the invention to provide a method by which large amounts of telemetry data may be efficiently used to monitor the system with data processing equipment as is conventionally used at monitoring sites. It is a further object of the invention to limit the impact of modeling of an expected nominal behavior on the detection of anomalies, and to thereby increase the reliability of the method. It is yet a further object of the invention to increase the sensitivity for detecting an anomaly. It is yet a further object of the invention to reduce the number of false alarms as compared to the previous art.

In view of the above objects, a method having the features of claim 1, an apparatus having the features of claim13, and a monitoring/surveillance system comprising the apparatus and the system providing the telemetry data, are proposed. Preferred embodiments of the invention are described in the dependent claims.

According to a preferred embodiment of the invention, a method having the features of claim 1 is employed as a method for monitoring/surveillance of a spacecraft or equipment aboard a spacecraft. According to another preferred embodiment of the invention, a method having the features of claim 1 is employed as a monitoring/surveillance method for a robot or equipment aboard a robot.

According to a further preferred embodiment of the invention, an apparatus having the features of claim 13 is employed as a monitoring/surveillance apparatus for a spacecraft or equipment aboard a spacecraft. According to another preferred embodiment of the invention, an apparatus having the features of claim 13 is employed as a monitoring/surveillance apparatus for a robot or equipment aboard a robot.

According to an aspect of the invention, a method for monitoring an operational state of a system on the basis of telemetry data is provided, wherein the operational state is either a first state or a second state, the second state being a state different from the first state, and the telemetry data comprises time series data of at least one parameter of the system indicating the operational state of the system over time, the method comprising: obtaining first interval data indicating time series data of a parameter of the at least one parameter of the system relating to a time interval of a predetermined duration; determining one or more characteristic quantities of the first interval data, the one or more characteristic quantities determined at this step forming a first set of characteristic quantities; obtaining a plurality of second sets of characteristic quantities, wherein the plurality of second sets of characteristic quantities relate to the quantities, wherein the plurality of second sets of characteristic quantities relate to the parameter of the at least one parameter of the system and to a plurality of time intervals of the predetermined duration during which the system was in the first state; and determining a probability of the first set of characteristic quantities being an outlier with respect to the plurality of second sets of characteristic quantities.

In the context of the present invention, an outlier is to be understood as an outlier in the statistical sense. In the statistical sense, an outlier is an observation which deviates so much from other observations as to arouse suspicions that it was generated by a different mechanism. According to the invention, an outlier is an outlier determined by a density-based approach, particularly by an approach based on a local density of the plurality of second sets.

Accordingly, a method for monitoring an operational state of a system on the basis of telemetry data may be provided that is more reliable, more sensitive and more efficient than prior art methods. Determining a probability that a sample set (first set) of characteristic quantities is an outlier with respect to a plurality of pre-stored sets (second sets) of characteristic quantities relating to a nominal operation state (first state) has an advantage over prior art methods that no manual selection of groups of parameters, no setting of thresholds, and no modeling of nominal behavior or the like are required. Accordingly, an incurred engineering effort is dramatically reduced, which additionally has the positive effect that human-made errors may be avoided and reliability of the overall method is significantly increased. Moreover, the detection of the novel operation state (second state) based on judging whether the sample set of characteristic quantities is an outlier with respect to the plurality of pre-stored sets of characteristic quantities according to the invention is self-consistent insofar as no modeling of nominal/anomalous behavior or theoretical assumptions on parameters indicating the operational state of the system are required for executing the inventive method. Therefore, according to the inventive method no anomalies are overlooked because of incorrect theoretical assumptions, and also for this reason, less unnecessary false alarms are triggered.

In addition, the inventive method, by contrast to prior art methods, does not rely on exclusively analyzing distances between data points in some appropriately chosen space, but by virtue of outlier detection also takes into account local densities of data points. Therefore, a distribution of data points indicating nominal behavior of the system providing telemetry data may be properly accounted for. Accordingly, the number of false alarms indicating that the system is in a novel operation state that were triggered in the prior art may be further reduced.

A further advantage of the invention is that by determining one or more characteristic quantities for a parameter allows interpreting the parameter as a one-and preferably more-dimensional data point. Accordingly, as the inventors have realized, even when a single parameter is considered (e.g. one parameter at a time), the parameter may be meaningfully monitored via vector-calculus based outlier determination. By using vector-calculus based outlier determination, the determination of the probability that the sample set is an outlier may be performed in a very efficient manner. Moreover, since single parameters may be dealt with in a meaningful and efficient manner, large numbers of parameters may be dealt with independently (either serially or in parallel), and the so-called "curse of dimensionality" may be avoided.

In connection therewith, the inventive method has the advantage that the plurality of pre-stored sets may be obtained for some or all of the parameters comprised by the telemetry data prior to the actual monitoring procedure, such that carrying out the inventive method requires very little computational effort during actual monitoring of the system. Accordingly, also for this reason, large numbers of parameters may be analyzed serially or in parallel, even with conventional data processing equipment as is conventionally used at monitoring sites, such that no restriction to monitoring a subset of parameters comprised by the telemetry data is necessary. As a consequence, the risk of overlooking anomalies may be further reduced with respect to prior art methods.

Summarizing, it is an important advantage of the present invention over the prior art that it allows to efficiently and systematically process large numbers of different parameters (typically 20.000 to 40.000 for spacecrafts and robots) and large numbers of different time periods, such that a quick and reliable detection of which parameter in which time period has had a novel behavior is possible.

It is further proposed to compare the determined probability to a threshold probability; and if the determined probability exceeds the threshold probability, to provide a message indicating at least one of the time interval and the parameter of the at least one parameter of the system. Accordingly, the parameter and/or the time period displaying novel behavior is readily indicated.

According to an aspect of the invention, it is proposed to compare the determined probability to a threshold probability; and if the determined probability exceeds the threshold probability, to control the system to enter a 'safe mode'.

Preferably, the one or more characteristic quantities may be statistical quantities.

Using statistical quantities has the advantage that statistical quantities may be calculated in a very simple and time-efficient manner. Moreover, statistical quantities offer a straightforward interpretation, and apart therefrom are not sensitive to the time development of the parameter values, which are comprised by the time series data time series data during the time interval of predetermined duration. In other words, statistical quantities contain enough information in order to monitor the operational state of the system and to detect an anomaly, whereas information which is not necessary for this task is not represented by the statistical quantities. Information of the latter kind for instance relates to whether the parameter value is rising, falling or fluctuating during the time interval of predetermined duration.

Preferably, the one or more characteristic quantities may comprise at least one of a time average of the parameter during the time interval, a standard deviation of the parameter during the time interval, a maximum value of the parameter during the time interval and a minimum value of the parameter during the time interval.

The first set of characteristic quantities is arranged as a first tuple of characteristic quantities and the plurality of second sets of characteristic quantities is arranged as a plurality of second tuples of characteristic quantities; a distance function indicating a separation between two given tuples of characteristic quantities is defined; the method further comprises: determining, using the distance function, a first group of second tuples comprising a predetermined number of nearest neighbors of the first tuple; determining, using the distance function, a first density measure indicating an average density of the tuples of the first group of second tuples; determining, using the distance function, for each tuple in the first group of second tuples a second group of second tuples comprising the predetermined number of nearest neighbors of the respective tuple in the first group of second tuples; determining, using the distance function, for each second group of second tuples a second density measure indicating an average density of the tuples of the respective second group of second tuples; determining the probability of the first tuple being an outlier with respect to the plurality of second tuples based on the first density measure and the second density measures. Preferably, the distance function is defined by application of a norm to the difference of the two given tuples.

In the above, a tuple is an ordered list of quantities, such as a vector. In a non-limiting example, if the parameter of interest is denoted $x$, the characteristic quantities may relate to a time average $\bar{x}$, a standard deviation $\sigma x$, a maximum value $\max(x)$ and a minimum value $\min(x)$ of the parameter value during the time interval of predetermined duration. Then, such a tuple or vector may be given by $(\bar{x}, \sigma x, \max(x), \min(x))$ and may be interpreted as a point in a four-dimensional space in which the first coordinate axis corresponds to the time average, the second coordinate axis corresponds to the standard deviation, the third coordinate axis corresponds to the maximum value, and the fourth coordinate axis corresponds to the minimum value. In the following, the terms "tuple" and "vector" may be used interchangeably.

Accordingly, well-known methods of vector calculus may be applied to monitor the operational state of the system. Therefore, monitoring of the operational state of the monitored system may be performed in a particularly efficient manner, such that also large amounts of telemetry data may be processed at a monitoring site. Furthermore, since the probability that the sample set is an outlier with respect to the pre-stored sets is determined based on local density measures, the inventive method provides a result for the probability that is independent of density fluctuations of the pre-stored sets of characteristic quantities and thus appropriately takes into account the distribution of the pre-stored sets.

According to an aspect of the invention, the first density measure may be based on a plurality of distances between the tuples of the first group of second tuples and the first tuple, the distances being determined by using the distance function; and the second density measure may be based on a plurality of distances between the tuples of the respective second group of second tuples and the respective tuple of the first group of second tuples, the distances being determined by using the distance function. Preferably, the first density measure may is based on a quadratic mean of the plurality of distances between the tuples of the first group of second tuples and the first tuple. Further preferably, the second density measure is based on a quadratic mean of the plurality of distances between the tuples of the respective second group of second tuples and the respective tuple of the first group of second tuples.

Preferably, the method may further comprise a step of determining a third density measure indicating an average density of the plurality of second tuples of characteristic quantities, wherein the step of determining the probability of the first tuple being an outlier with respect to the plurality of second tuples is based on the first density measure, the second density measures and the third density measure.

Accordingly, the obtained probability that the sample set is an outlier with respect to the plurality pre-stored sets may be normalized in a very transparent manner, such that a meaningful and interpretable result is obtained. Outlier probabilities relating to different parameters, which are obtained in this manner thus may be immediately compared to each other.

According to an aspect of the invention, the method may further comprise: obtaining first state time series data of the parameter of the at least one parameter of the system relating to a time period during which the system was in the first state; dividing the first state time series data into a plurality of time intervals of the predetermined duration; determining, for each of the plurality of intervals, the one or more characteristic quantities, the one or more characteristic quantities determined at this step for each of the plurality of intervals forming a first state set of characteristic quantities; using the plurality of first state sets of characteristic quantities as the plurality of second sets of characteristic quantities.

The procedure according to the foregoing aspect may be performed independently of the actual monitoring procedure. Therefore, computational effort for the actual monitoring procedure may be limited to a minimum, which results in an increase of performance of the actual monitoring procedure according to the inventive method. With the increase of performance of the actual monitoring procedure according to the inventive method, a plurality of parameters may be monitored either serially or in parallel, thus further decreasing the risk that an anomaly is overlooked.

According to an aspect of the invention, the method may further comprise the step of adding the first set of characteristic quantities to the plurality of second sets of characteristic quantities if it is decided that the system was in the first state during the time interval.

By this means, the number of pre-stored sets of characteristic quantities may be successively increased, and the basis on which it is decided whether a sample set, which is obtained during a future application of the inventive method relates to the nominal operation state or the novel operation state, is broadened.

Preferably, the predetermined duration may be chosen in accordance with a characteristic time scale of the monitored system (e.g. an orbital period). Further preferably, the method is performed using a first predetermined duration and is subsequently or simultaneously performed using a second predetermined duration, wherein the first and second predetermined durations are different from each other.

Accordingly, inconsistencies that might result from timing offsets between the time intervals of predetermined duration according to which the pre-stored sets were obtained and the time interval of predetermined duration according to which the sample set was obtained may be reliably avoided. Using two different predetermined durations, i.e. a shorter time interval and a longer time interval, as a basis for the anomaly detection allows to both capture new behavior in rapidly changing behavior of the system and in more stable behavior of the system.

Further preferably, the method may be carried out for each parameter of the at least one parameter of the system indicating an operational state of the system, and the method may further comprise a step of outputting a list of parameters of the at least one parameter of the system which indicate the second state of the system.

Additionally, the method may comprise a step of, if the first set is found to not be an outlier with respect to the plurality of second sets, issuing a message indicating that operation of the system is nominal. This would give the operating personnel assurance that the system operates according to the nominal operation state, and no actions on the side of the operation personnel are necessary.

Preferably, the parameters of the list may be ordered by the respective determined probability.

According to an aspect of the invention, the method may further comprise a step of: deciding, based on the determined probability whether the system during the time interval was in the second state or in the first state, wherein deciding whether the system during the time interval was in the second state or in the first state comprises comparing the determined probability to a second threshold probability.

Since the determined probability that the sample set is an outlier with respect to the plurality of pre-stored sets is meaningful in a sense that no further normalization or the like is necessary, the presence of novel behavior may be conveniently judged based on a simple comparison of the probability to a preset threshold probability. Thereby, an alarm may be triggered without further investigation.

According to an aspect of the invention, the system may be one of a spacecraft, equipment aboard a spacecraft, a robot or equipment aboard a robot. Preferably, the spacecraft may be a satellite or a space probe, and the robot preferably may be a rover, such as a planetary rover, e.g. a Mars rover.

A summary of an apparatus according to the present invention is given below wherein it has to be noted that additionally the means of the apparatus are configured to perform features and aspects of the method according to the above-described aspects which are not all described in detail below for sake of conciseness of the present description. Features, aspects and advantages of the above-mentioned aspects of the method according to the present invention also apply to the apparatus according to the invention. For the sake of conciseness of the present description, these features and advantages are not repeated.

According to an aspect of the invention, an apparatus for carrying out the inventive method may be provided.

According to an aspect of the invention, an apparatus for monitoring an operational state of a system on the basis of telemetry data, wherein the operational state is either a first state or a second state, the second state being a state different from the first state, and the telemetry data comprises time series data of at least one parameter of the system indicating the operational state of the system overtime, comprises: means for obtaining first interval data indicating time series data of a parameter of the at least one parameter of the system relating to a time interval of a predetermined duration; means for determining one or more characteristic quantities of the first interval data, the one or more characteristic quantities determined at this step forming a first set of characteristic quantities; means for obtaining a plurality of second sets of characteristic quantities, wherein the plurality of second sets of characteristic quantities relate to the parameter of the at least one parameter of the system and to a plurality of time intervals of the predetermined duration during which the system was in the first state; and means for determining a probability of the first set of characteristic quantities being an outlier with respect to the plurality of second sets of characteristic quantities.

Further, it is proposed that the apparatus further comprises means for providing a message indicating at least one of the time interval and the parameter of the at least one parameter of the system if the determined probability exceeds a threshold probability.

According to another aspect of the invention, it is proposed that the apparatus further comprises means for controlling the system to enter a 'safe mode' if the determined probability exceeds a threshold probability.

Preferably, the means for determining one or more characteristic quantities may be configured to determine statistical quantities. Further preferably, the means for determining one or more characteristic quantities may be configured to determine at least one of a time average of the parameter during the time interval, a standard deviation of the parameter during the time interval, a maximum value of the parameter during the time interval and a minimum value of the parameter during the time interval.

The means for determining a probability of the first set of characteristic quantities being an outlier with respect to the plurality of second sets of characteristic quantities is configured to arrange the first set of characteristic quantities as a first tuple of characteristic quantities and to arrange the plurality of second sets of characteristic quantities as a plurality of second tuples of characteristic quantities; said means is further configured to determine a distance function indicating a separation between two given tuples of characteristic quantities; the apparatus further comprises: means for determining a first group of second tuples comprising a predetermined number of nearest neighbors of the first tuple, using the distance function; means for determining a first density measure indicating an average density of the tuples of the first group of second tuples, using the distance function; means for determining for each tuple in the first group of second tuples a second group of second tuples comprising the predetermined number of nearest neighbors of the respective tuple in the first group of second tuples, using the distance function; means for determining for each second group of second tuples a second density measure indicating an average density of the tuples of the respective second group of second tuples, using the distance function; wherein the means for determining the probability of the first tuple being an outlier with respect to the plurality of second tuples is configured to determine the probability based on the first density measure and the second density measures. Preferably, the distance function is defined by application of a norm to the difference of the two given tuples.

Preferably, the first density measure may be based on a plurality of distances between the tuples of the first group of second tuples and the first tuple, the distances being determined by using the distance function; and the second density measure may be based on a plurality of distances between the tuples of the respective second group be based on a plurality of distances between the tuples of the respective second group of second tuples and the respective tuple of the first group of second tuples, the distances being determined by using the distance function. Preferably, the first density measure may be based on the quadratic mean of a plurality of distances between the tuples of the first group of second tuples and the first tuple. Further preferably, the second density measure may be based on the quadratic mean of a plurality of distances between the tuples of the respective second group of second tuples and the respective tuple of the first group of second tuples.

Preferably, the apparatus may further comprise a means for determining a third density measure indicating an average density of the plurality of second tuples of characteristic quantities, wherein determining the probability of the first tuple being an outlier with respect to the plurality of second tuples is based on the first density measure, the second density measures and the third density measure.

According to an aspect of the invention, the apparatus may further comprise: means for obtaining first state time series data of the parameter of the at least one parameter of the system relating to a time period during which the system was in the first state; means for dividing the first state time series data into a plurality of time intervals of the predetermined duration; means for determining, for each of the plurality of intervals, the one or more characteristic quantities, the one or more characteristic quantities forming a first state set of characteristic quantities; and means for using the plurality of first state sets of characteristic quantities as the plurality of second sets of characteristic quantities.

According to a further aspect of the invention, the method may further comprise means for adding the first set of characteristic quantities to the plurality of second sets of characteristic quantities if it is decided that the system was in the first state during the time interval.

Preferably, the predetermined duration may be chosen in accordance with a characteristic time scale of the monitored system (e.g. an orbital period). Further preferably, the apparatus is configured to use a first predetermined duration and to subsequently or simultaneously use a second predetermined duration, wherein the first and second predetermined durations are different from each other.

Further preferably, the apparatus may be configured to process each parameter of the at least one parameter of the system indicating an operational state of the system, and the apparatus may further comprise means for outputting a list of parameters of the at least one parameter of the system which indicate the second state of the system.

Additionally, the apparatus may comprise means for issuing a message indicating that operation of the system is nominal if the first set is found to not be an outlier with respect to the plurality of second sets. Preferably, the parameters of the list may be ordered by the respective determined probability.

According to another aspect of the invention, the apparatus may further comprise means for deciding, based on the determined probability whether the system during the time interval was in the second state or in the first state, wherein deciding whether the system during the time interval was in the second state or in the first state comprises comparing the determined probability to a second threshold probability.

According to an aspect of the invention, the system may be one of a spacecraft, equipment aboard a spacecraft, a robot or equipment aboard a robot. Preferably, the spacecraft may be a satellite or a space probe, and the robot preferably may be a rover, such as a planetary rover, e.g. a Mars rover.

According to an aspect of the invention, a monitoring/surveillance system comprising the inventive apparatus and a system providing telemetry data may be provided, the telemetry data comprising time series data of at least one parameter of the system indicating an operational state of the system overtime.

**Brief Description of the Figures**

**Fig. 1** is a flowchart illustrating a method for monitoring an operational state of a system on the basis of telemetry data, according to an embodiment of the invention;

**Fig. 2** is a flowchart illustrating a step of the flowchart in **Fig. 1**;

**Fig. 3** is a flowchart illustrating a step of the flowchart in **Fig. 2**;

**Fig. 4A** is a flowchart illustrating a method for monitoring an operational state of a system on the basis of telemetry data, according to a first alternative embodiment of the invention;

**Fig. 4B** is a flowchart illustrating a method for monitoring an operational state of a system on the basis of telemetry data, according to a second alternative embodiment of the invention;

**Fig. 5** illustrates time series data relating to a parameter indicating the operational state of the system over time;

**Fig. 6** illustrates time series data relating to another parameter indicating the operational state of the system over time;

**Fig. 7** illustrates sets of characteristic quantities relating to the time series data of **Fig. 6;**

**Figs. 8A** and **8B** depict values of an outlier probability determined for four exemplary sets of characteristic quantities;

**Fig. 9** illustrates a comparison of the inventive method and a prior art method for monitoring a system with the aid of the time series data of **Fig. 6;**

**Fig. 10** further illustrates the prior art method for monitoring the system of **Fig. 9;**

**Fig. 11** schematically illustrates an apparatus according to the invention as part of a monitoring/surveillance system comprising the apparatus and a system providing telemetry data.

**Detailed Description of the Figures and Preferred Embodiments of the Present Invention**

Preferred embodiments of the present invention will be described in the following with reference to the accompanying figures. It is noted that the present invention is not limited to the described embodiments and that the described features and aspects of the embodiments may be modified or combined to form further embodiments of the present invention.

It is to be noted that in the following description of preferred embodiments the present invention will be described with respect to the purpose of anomaly investigations in the field of spacecrafts and robots. Generally, the invention is applicable to detecting novel behavior of a monitored system. The novel behavior of the monitored system may either relate to expected novel behavior or unexpected novel behavior, i.e. an anomaly. In the case of the monitored system being a spacecraft or a robot, expected novel behavior may for instance occur if the spacecraft or robot enters a new mission phase or is instructed to perform a maneuver. An anomaly on the other hand may for instance relate to a malfunction of the monitored system.

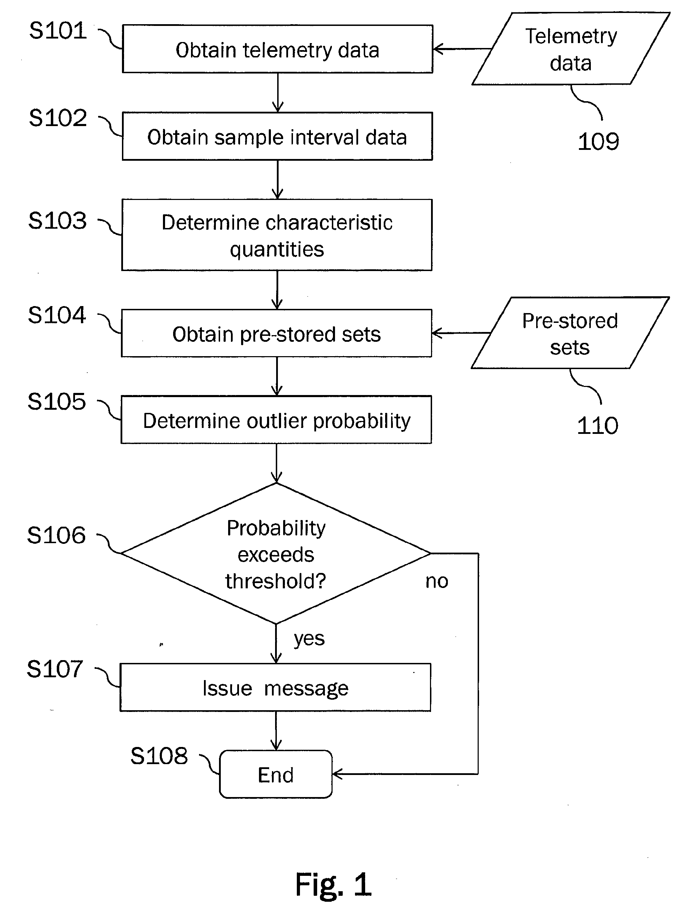

**Fig. 1** shows a flowchart of a method for monitoring an operational state of a system on the basis of telemetry data, wherein the operational state is either a nominal operation state (corresponding to a first state of the system) or an operation state displaying novel behavior (corresponding to a second state of the system), the anomalous operation state being a state different from the nominal operation state, and the telemetry data comprises time series data of at least one parameter of the system indicating the operational state of the system over time. In the following, the system may particularly relate to a spacecraft or robot.

In a first step S101, telemetry data 109 comprising time series data of at least one parameter of the system indicating the operational state of the system over time is obtained.

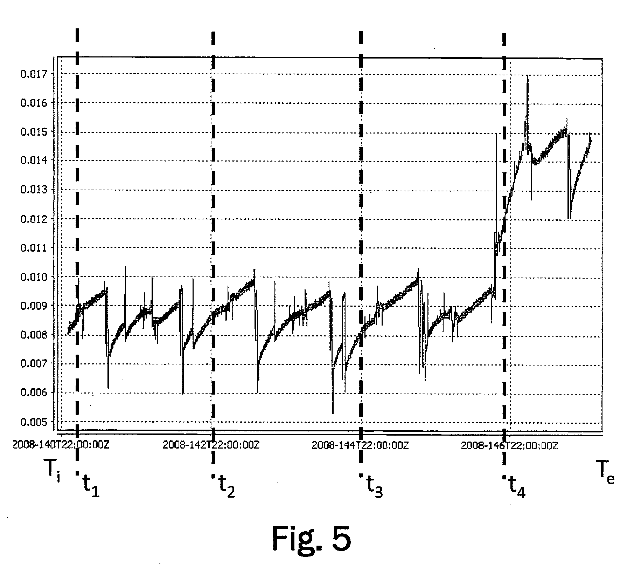

In step S102, time series data relating to a time interval of a predetermined duration and relating to a particular parameter of the system is extracted from the time series data comprised by the telemetry data 109 and sample interval data (corresponding to first interval data) is obtained. This step will now be described in more detail with reference to **Fig. 5.**

**Fig. 5** shows time series data relating to a given parameter of the system, which is in the following, without any intended limitation, denoted $p_1$ for the purpose of illustration. The telemetry data 109 comprises time series data of at least one parameter of the system. Typically, the telemetry data 109 comprises time series data of a large number of parameters, for instance of the order of 20.000 to 40.000 parameters. For each of these parameters, the time series data comprised by the telemetry data 109 comprises a sequence of parameter values accumulated over a given period of time. In the example of **Fig. 5,** the time series data of parameter $p_1$ comprises the values of the parameter $p_1$ between the timings $T_i$ and $T_e$. Typically, the telemetry data 109 is stored at the system in an internal storage and is provided to a monitoring site in packets at regular intervals, for example once a day. However, also shorter or longer intervals for providing the telemetry data 109 are possible. In the present example, the telemetry data 109 for each of the parameters comprises time series data indicating parameter values between timings $T_i$ and $T_e$. In cases in which the telemetry data 109 is provided continuously, the telemetry data 109 may be stored at the monitoring site for a given duration, and then processed in the same manner as telemetry data that has been stored at the system providing the telemetry data.

In the example, the period of time between timings $T_i$ and $T_e$ is subdivided such that it comprises time intervals $t_1$ to $t_2$, $t_2$ to $t_3$, and $t_3$ to $t_4$. Therein, it is self-evident that the time intervals, $t_1$ to $t_2$, $t_2$ to $t_3$, and $t_3$ to $t_4$ have a shorter duration than the time interval $T_i$ to $T_e$. Of these time intervals $t_1$ to $t_2$, $t_2$ to $t_3$, and $t_3$ to $t_4$ one time interval is chosen as the sample interval. For illustrative purposes, without any intended limitation, the time interval $t_2$ to $t_3$ is chosen in the present example. However, it is to be noted that also any other time interval and also the whole time interval between timings $T_i$ and $T_e$ might be chosen as the sample interval. Therefore, obtaining sample interval data in step S102 requires choosing a parameter of the system (parameter $p_1$ in the present example) and choosing a time interval (time interval $t_2$ to $t_3$ in the present example). Accordingly, the sample interval data comprises the time series data of the chosen parameter during the chosen time interval. Preferably, but not necessarily, the duration of the sample interval may be chosen in accordance with a periodicity of the operation of the system. For instance, if the system is a satellite in an orbit, the duration of the sample interval preferably may be chosen as the orbital period of the satellite. By such a choice, different time intervals extracted from the telemetry data may be compared to each other in a meaningful way. As a further example for a choice of duration of a sample interval, if the system for instance is a Mars rover, the duration of the sample interval preferably may be chosen in accordance with the duration of a day on Mars or in accordance with the duration of a mission phase of the Mars rover.

Returning now to **Fig. 1,** in step S103, characteristic quantities relating to the sample interval data are determined. According a non-limiting example of the present embodiment, these characteristic quantities may relate to statistical quantities, such as an average value of the parameter during the sample interval of time, a maximum value of the parameter during the sample interval of time, a minimum value of the parameter during the sample interval of time, or the standard deviation of the parameter from the average during the sample interval of time. Of the aforesaid four statistical quantities, there are one combination comprising all four statistical quantities, four combinations comprising three of the statistical quantities, six combinations comprising two of the statistical quantities and four combinations comprising one of the statistical quantities, all of which are considered as explicitly disclosed herewith. Additional statistical quantities that may be considered at this step include a geometric mean, a median, various quantiles, or the like. Further suitable statistical quantities are readily apparent to the expert of skill in the art. Also, the number of statistical quantities determined at this step may be less or more than four. For instance, 2, 3, 4, 5, 6 or more statistical quantities may be determined at this step. While statistical quantities have proven to be of advantage, also characteristic quantities relating to derivatives of the parameter or patterns of the parameter may be considered as the characteristic quantities.

In step S103, according to an example of the invention, the four statistical quantities average, standard deviation, maximum value and minimum value are calculated for the sample interval. In detail, in the present example illustrated with help of **Fig. 5,** the following statistical quantities are calculated: The average of values of $p_1$ between timings $t_2$ and $t_3$, the standard deviation from the average of the values of $p_1$ between timings $t_2$ and $t_3$, the maximum value of $p_1$ between timings $t_2$ and $t_3$, which is approximately given by 0.0103, and the minimum value of $p_1$ between timings $t_2$ and $t_3$, which is approximately given by 0.0053. Thereby, the sample interval data relating to the sample interval is mapped to a sample set of characteristic quantities (corresponding to a first set of characteristic quantities). In the present example, the sample interval data is mapped to a set of the above four statistical quantities. Thereby, a single parameter may be interpreted as an, in the present example, four dimensional tuple or vector.

In step S104, a plurality of pre-stored sets of characteristic quantities 110 (corresponding to a plurality of second sets of characteristic quantities) are obtained. These pre-stored sets of characteristic quantities 110 may be stored in a database which is in connection with the monitoring site such that the pre-stored sets of characteristic quantities 110 may be retrieved from the database. It is understood that the pre-stored sets of characteristic quantities 110 have been determined from archived telemetry data that has been obtained in the past and that relates to a nominal operation state of the system. In other words, the pre-stored sets of characteristic quantities 110 may relate to archived telemetry data obtained during a period of time in which no anomaly of the system occurred and that was verified to relate to a nominal operation state of the system by suitable means. For instance, the pre-stored of sets of characteristic quantities 110 relate to archived telemetry data that was closely inspected by operating personnel and that was found to relate to a nominal operation state of the system by the operating personnel. Furthermore, it is understood that the pre-stored sets of characteristic quantities have been obtained in a manner analogous to steps S102 and S103. Particularly, the pre-stored sets of characteristic quantities referred to below relate to the same parameter as the sample set of characteristic quantities (parameter $p_1$ in the present example), the duration of the time interval according to which the pre-stored sets of characteristic quantities 110 have been determined is identical to the duration of the time interval according to which the sample set of characteristic quantities has been obtained (duration $t_3 - t_2$ in the present example). It is understood that different pre-stored sets of characteristic quantities relate to different time intervals, having identical duration but different initial timings. If applicable, the initial timings of the time intervals have been chosen in accordance with each other. For example, if the system is a satellite in an orbit, the initial timings of all time intervals may have been chosen to relate to the same orbital position of the satellite. Accordingly, the sample set and the pre-stored sets of characteristic quantities may be compared to each other in a meaningful way.

In step S105, a probability that the sample set is an outlier with respect to the pre-stored sets is determined. Therein, the term "outlier" is to be understood as an outlier in the statistical sense, and the probability is determined based on a local density of the pre-stored sets that have the closest similarity to the sample set, and preferably additionally on an overall (global) density of the pre-stored sets 110.

In step S106, it is determined whether the determined probability exceeds a predetermined threshold. If the probability exceeds the predetermined threshold, the method proceeds to step S107, otherwise it proceeds to step S108, at which the method ends. The predetermined threshold is a probability threshold indicating up to which outlier probability the sample set shall be considered as relating to a nominal operation state of the system. Clearly, a probability threshold of, say, 0.05 or 5% in most cases would turn out to be too low, such that unnecessary many false anomaly alarms would be triggered. On the other hand, a probability threshold of, say, 0.95 or 95% in most cases would turn out to be too high, such that unnecessary many real anomalies would be overlooked. Therefore, the threshold probability should be chosen at an intermediate value, such as, without intended limitation, 0.8 or 80%. Additionally, the threshold probability may be chosen by applying the above inventive method to archived telemetry data of which it is known to relate to an anomalous state of the system, and also applying the method to archived telemetry data of which it is known to relate to a nominal operation state of the system, and choosing the probability threshold such that a determined outlier probability exceeds the probability threshold in the former case, while it does not exceed the threshold probability in the latter case.

In step S107, a message indicating that the probability of the sample set being an outlier with respect to the pre-stored sets 110 exceeds the predetermined threshold is issued. According to an embodiment of the present invention, the message comprises the parameter (the name of the parameter) according to which the sample interval data was obtained in step S102. In another embodiment of the invention, the message comprises the time interval (e.g. initial timing and final timing or initial timing and interval duration) according to which the sample interval data was obtained at step S102. In another embodiment, the message comprises the parameter (the name of the parameter) according to which the sample interval data was obtained in step S102 and the time interval according to which the sample interval data was obtained at step S102. In another embodiment, the message comprises the sample interval data, optionally the parameter (the name of the parameter) and optionally the time interval. In another embodiment of the invention, the message additionally comprises the determined probability. In another embodiment of the invention, the message in addition to at least one of the above mentioned elements comprises the values of the determined characteristic quantities relating to the sample interval data. Further messages comprising combinations of some or all of the above-listed elements are considered to be within the scope of the invention.

The above message indicating that the determined probability exceeds the threshold probability may be displayed on a display device, such as a screen. Alternatively, or in addition, the message may be printed by a printer. Further alternatively, or in addition, the message may be stored to a database. In this case, a notification that the message has been stored in the database may be issued. This notification may relate to any of, or combinations of, a visible alarm, an audible alarm, a notification via Short Message Service (SMS), a notification via e-mail and/or a notification on a website. Prompted by the notification, operating personnel may then access the message stored in the database.

Based on the above message, operating personnel may investigate the telemetry data and decide whether the detected novel behavior relates to expected novel behavior or to an anomaly. If the novel behavior relates to expected novel behavior, no further steps may be necessary. For further reference, sample sets of characteristic quantities or the sample interval data, or any other data indicative of the expected novel behavior may be stored in a database, such that novel behavior that corresponds to the present case of expected novel behavior can be recognized as such in the future. Thereby, issuance of messages if novel behavior corresponding to the present case of expected novel behavior occurs may be avoided. Alternatively, a message might still be issued, however supplied with an indication that the novel behavior corresponds to expected novel behavior. On the other hand, if the detected novel behavior relates to an anomaly, timely countermeasures may be taken. Furthermore, if the detected novel behavior is classified by the operating personnel as relating to an anomaly, the sample set of characteristic quantities may be stored for further reference, such that similar novel behavior may be classified in the future without inspection by operating personnel.

The process ends at step S108. After the process has ended, monitoring of the system may continue with step S101 in which fresh telemetry data is obtained, or at step S102, at which different sample interval data relating to the telemetry data 109 is obtained. Therein, the different sample interval data may relate to a different choice of a sample interval. The different choice of the sample interval may relate to a different choice of a starting timing of the time interval and/or to a different choice of the duration of the time interval. As a non-limiting example, a first duration may be chosen longer than a second duration. Then, with the help of an execution of the inventive method based on the shorter duration, rapidly changing behavior of the system may be investigated, while with the help of an execution of the inventive method based on the longer duration, less rapidly changing behavior, i.e. more stable behavior of the system may be investigated. Thereby, the risk that novel behavior might be overlooked may be further reduced.

Furthermore, the different sample interval data may relate to a different choice of a sample parameter. Accordingly, some or all of the parameters of the system comprised by the telemetry data may be monitored. Preferably, all parameters of the system, insofar as they are comprised by the telemetry data, may be monitored. For each of the sample parameters, a corresponding threshold probability may be selected. However, also an appropriately chosen overall threshold probability may be used for all parameters.

It is also to be understood that the plural executions of the inventive method, that have been disclosed above to occur serially, may occur in parallel. That is, different sample data may be investigated by means of the inventive method at the same time. Accordingly, all parameters of the system comprised by the telemetry data may be monitored simultaneously. Furthermore, different sample intervals, having different starting timings and/or different durations, may be processed simultaneously.

Summarizing the above discussion, it is a major advantage of the present invention that the inventive method allows to efficiently identify which parameter in which time period has had a new behavior among a large number of parameters (typically 20.000 to 40.000 for spacecrafts and robots) and time periods, with manageable computational effort during the actual monitoring procedure. Therefore, also conventional data processing equipment, with which at present, using the prior art methods for monitoring a system, only a limited selection of parameters may be considered due to computational limitations, may be used to monitor up to all parameters of a typical spacecraft or robot. Moreover, by the present invention, an engineering effort required for executing prior art monitoring methods, for instance in modeling, is considerably reduced. Thereby, the reliability of the inventive method is further increased.

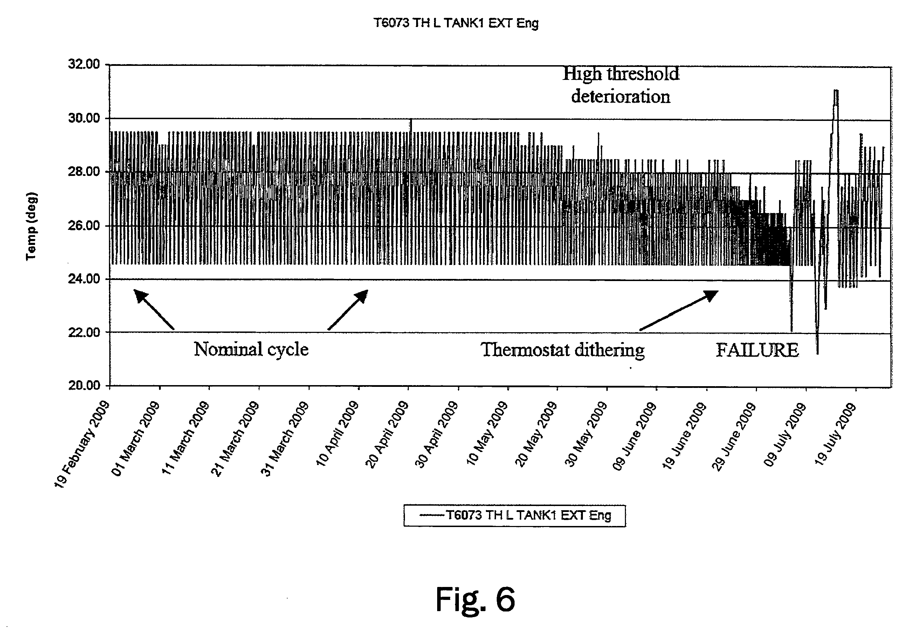

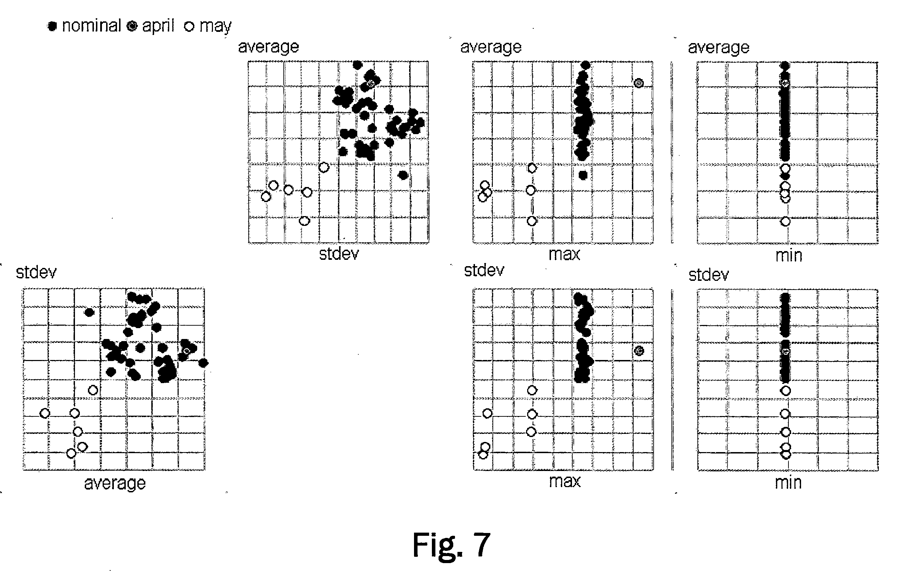

The above steps S101 through S106 will now be explained with reference to another example, as shown in **Figs. 6** and **7. In Fig. 6,** time series data for a given parameter *Temp* relating to a temperature of a tank aboard a satellite is shown. The time series extends from 19 February 2009 to a timing somewhat after 19 July 2009. The period between 19 February 2009 and 31 March 2009 is considered as a nominal period, that is, a period in which the system has been in a nominal operation state and no anomaly was present. The duration of the sample interval is chosen as two days, which corresponds to the orbiting period of the satellite around the Earth, such that the nominal period is subdivided into 20 time intervals, each having a duration of two days. For each of these time intervals, one or more characteristic quantities are determined. According to the present example of the invention, for each of these time intervals the following four quantities are calculated: the average of the values of the parameter *Temp* during the respective time interval, the standard deviation of the values of the parameter *Temp* from the average during the respective time interval, the maximum value attained by the parameter *Temp* during the respective time interval and the minimum value attained by the parameter *Temp* during the respective time interval. In the present example, for each of the 20 time intervals, these four statistical quantities form a set of characteristic quantities. The 20 sets of characteristic quantities represent pre-stored sets of characteristic quantities.

During the actual monitoring process, telemetry data is provided by the system. For illustrative purposes, it is assumed that telemetry data comprising time series data accumulated during the day 21 April 2009 is received. In this case, the time series relating to the values of the parameter Temp during the day 21 April 2009 constitutes the sample interval data. As explained above, the four statistical quantities average, standard deviation, maximum value and minimum value are calculated. These four statistical quantities then form the sample set of characteristic quantities.

In **Fig. 7,** the black dots represent the pre-stored sets of characteristic quantities, while the gray dot represents the sample set of characteristic quantities. Each of the white dots represents further sample sets of characteristic quantities that may have been obtained during monitoring of the system in May 2009. The six panels in **Fig. 7** show plots of one of the statistical quantities of the various sets of characteristic quantities against another statistical quantity. For example, the second panel in the first row illustrates that the nominal sets of characteristic quantities (black dots) within some margin have the same maximum value of the parameter *Temp,* while the sample set of 21 April 2009 (gray dot) has a higher maximum value of the parameter Temp, and the sample sets that may have been obtained during May 2009 (white dots) have lower maximum values. Determining the probability that the sample set is an outlier with respect to the pre-stored sets in the present example would result in high probabilities for the sample set of 21 April 2009 and the sample sets of May 2009 that these sample sets are in fact outliers with respect to the pre-stored sets. The determination of the probability that the sample set is an outlier with respect to the pre-stored sets will be explained in more detail below.

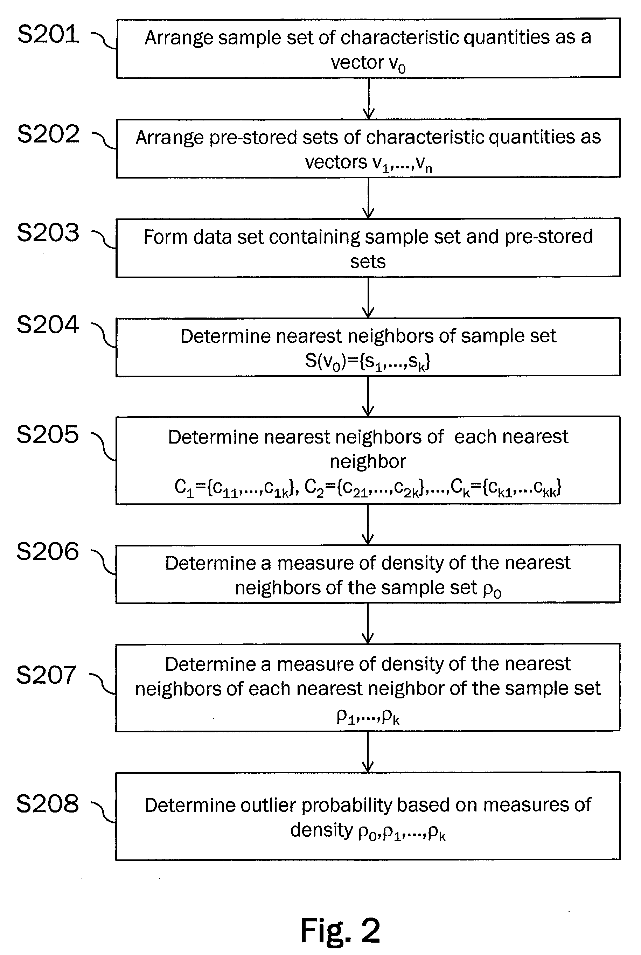

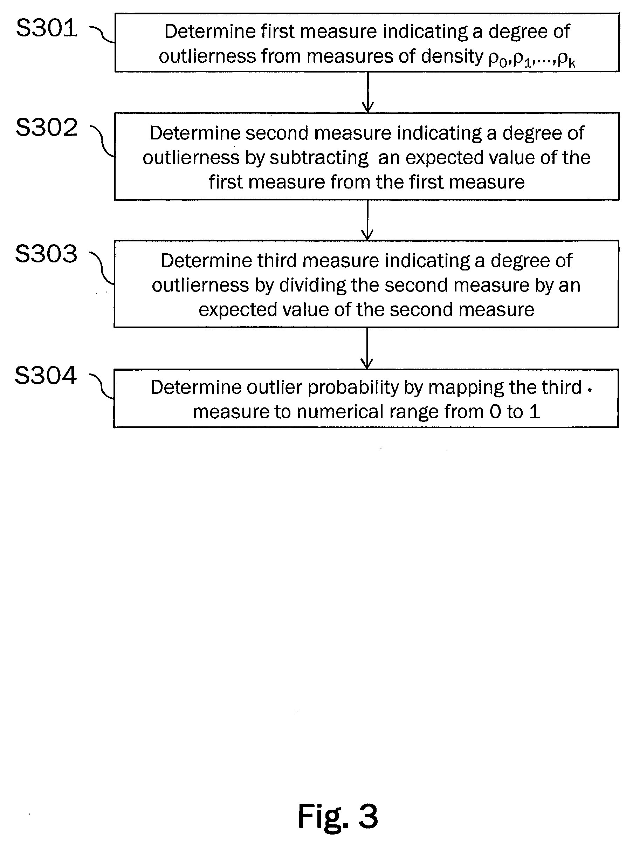

**Fig. 2** illustrates step S105 of **Fig. 1** in more detail. The procedure described with reference to **Fig. 2** and also **Fig. 3** is an adaptation of the so-called "LoOP" method, as disclosed in Kriegel, H.-P. et al., "LoOP: Local Outlier Probabilities", CIKM'09, November 2-6, 2009, Hong Kong, China. As will be appreciated by those familiar with the LoOP method, the inventive procedure differs from the LoOP method in at least two crucial features.

First, according to the present invention, single parameters may be considered. This is made possible by mapping a single parameter, for a given time interval, to a vector built up by statistical quantities that were calculated from the values of the parameter during the time interval. By contrast, according to the LoOP method, vectors built up by different parameters are considered.

Second, according to the present invention, it is only investigated whether the sample set is an outlier with respect to the pre-existing pre-stored sets. Thereby, the determination of the probability that the sample set is an outlier with respect to the pre-stored sets proceeds in a very fast manner and incurs very little computational efforts. By contrast, according to the LoOP method, an outlier probability is determined for each vector of a data set, which requires much larger computational efforts. Therefore, the focus of the LoOP method is to detect outliers within a given set of samples (e.g. in order to identify outstanding players from a set of players), whereas the present invention is concerned with detecting if new samples are outliers or not with respect to a nominal data set.

In step S201, the sample set of characteristic quantities is arranged as a vector $v_0$ (corresponding to a first tuple of characteristic quantities). Herein, a vector is understood as an ordered list (tuple) of the characteristic quantities. These definitions are intended for illustrational purposes and are not intended to in anyway limit the scope of the well-known definitions of a vector and a tuple. If the chosen parameter of the system is denoted $x$, the vector $v_0$ may be given by the ordered list

$$(\bar{x}, \sigma x, \max(x), \min(x)),\qquad\qquad\qquad(1)$$

wherein $\bar{x}$ is the average of values of parameter $x$ during the sample interval, $\sigma x$ is the standard deviation of the values of the parameter $x$ from the average during the sample interval, $\max(x)$ is the maximum value attained by the parameter $x$ during the sample interval, and $\min(x)$ is the minimum of the parameter $x$ attained during the sample interval. This vector $v_0$ may be interpreted as a point in a vector space. The dimensionality of the vector space corresponds to the number of characteristic quantities. Therefore, in the present example, the dimensionality of the vector space is four. For simplifying the following discussion, it will not be distinguished between the set of characteristic quantities and the corresponding vector, and e.g. the terms "sample set", "vector $v_0$" and "sample set $v_0$" may be used interchangeably.

In a vector space, a distance between two different vectors may be determined by means of a distance metric, for instance the Euclidean distance metric. If two vectors $a,b$ in a $N$-dimensional vector space are given by $(a^1,...,a^N)$ and $(b^1,...,b^N)$, the Euclidean distance metric is given by

$$d_E(a,b) = \sqrt{(a^1 - b^1)^2 + ... + (a^N - b^N)^2}\,.\qquad\qquad(2)$$

While also other distance metrics, such as a generic $L^p$ norm may be considered, e.g. the Manhattan metric, in the following the Euclidean distance metric of equation (2) will be adopted, and it will for conciseness simply be referred to a distance metric instead of Euclidean distance metric.

In step S202, the pre-stored sets of characteristic quantities are arranged as vectors $v_1$ to $v_n$ (corresponding to second tuples of characteristic quantities), wherein it is understood that $n$ is the number of pre-stored sets of characteristic quantities obtained at step S104 in **Fig. 1**. It is also clear that the characteristic quantities building up the vectors $v_1$ through $v_n$ are arranged in the same manner as the characteristic quantities are arranged in the vector $v_0$. That is, in the present example, the characteristic quantities in the vectors $v_1$ through $v_n$ are arranged in analogy to the order indicated by equation (1).

In step S203, the vector $v_0$ corresponding to the sample set of characteristic quantities and the vectors $v_1$ through $v_n$ corresponding to the plurality of pre-stored sets of characteristic quantities are combined into a single data set comprising the vectors $v_0$ through $v_n$.

In step S204, the k nearest neighbors of the vector $v_0$ (corresponding to a first group of second tuples) are determined by means of the distance metric, wherein $k$ is a predetermined parameter. As is intuitively clear, the $k$ nearest neighbors of the vector $v_0$ correspond to those $k$ vectors of the vectors $v_1$ through $v_n$ that have the smallest distance, the next to smallest distance,..., and the $k$-th to smallest distance to $v_0$, wherein the distances are determined by means of the distance metric. For further reference, the $k$ nearest neighbors of the vector $v_0$ will be denoted by $S(v_o) = \{s_1,...,s_k\}$. Typical values for $k$ are of the order of ten to 20, whereas it is to be noted that the particular choice of the parameter $k$ is expected to have little or no impact on the final result of the determination of the probability whether the sample set is an outlier.

In step S205, for each of *the k* nearest neighbors of the vector $v_0$, *the k* nearest neighbors (corresponding to second groups of second tuples) are obtained. That is, a first set of $k$ nearest neighbors $C_1 = (c_{1l},...,c_{1k})$ for $s_1$ is

determined, a second set of $k$ nearest neighbors $C_2 = (c_{21},...,c_{2k})$ for $s_2$ is determined, and so forth, and a $k$-th set of $k$ nearest neighbors $C_k = (c_{k1},...,c_{kk})$ for $s_k$ is determined. In total, in step S205 $k$ sets of $k$ nearest neighbors are determined. Each of these sets of $k$ nearest neighbors has as its constituents vectors of the vectors $v_1$ through $v_n$. Different sets of $k$ nearest neighbors in the above may comprise the same vector of the vectors $v_1$ through $v_n$, for instance both the sets of $k$ nearest neighbors $C_1$ and $C_2$ may comprise the vector $v_1$.

In step S206 a first density measure $\rho_0$ of the $k$ nearest neighbors of the vector $v_0$ is determined. To this end, the center $o$ of the spatial distribution of vectors $s_1$ to $s_k$ is determined, such that the center $o$ is the "center of mass" of the spatial distribution of vectors $s_1$ to $s_k$. As an illustrative example, the "center of gravity" of three vectors $a$, $b$, $c$ in an $N$-dimensional vector space is given by

$$o(a,b,c) = \frac{1}{3}(a^1 + b^1 + c^1,..., a^N + b^N + c^N). \tag{3}$$

It is to be noted that the center $o$ not necessarily coincides with the vector $v_0$, which is however immaterial for the successful functioning of the inventive method. It is now assumed that the individual distances of vectors $s_1$ to $s_k$ from the center $o$ follow a half-Gaussian distribution, such that a standard deviation of these distances may be calculated:

$$\sigma(s_1,...,s_k) = \sqrt{\frac{d_E(o,s_1)^2 + ... + d_E(o,s_k)^2}{k}}. \tag{4}$$

The first density measure $\rho_0$ then is given by

$$\rho_0 = \lambda \cdot \sigma(s_1,...,s_k), \tag{6}$$

wherein the parameter $\lambda$ is a normalization factor that has no impact on the final result of the determination of the probability whether the sample set is an outlier. Preferably, $\lambda$ is chosen in a range $0 < \lambda < 5$. Therein, $\rho_0$ is a measure of the density of the $k$ nearest neighbors of the vector $v_0$ insofar as the reciprocal of $\rho_0$ corresponds to the density of the $k$ nearest neighbors of $v_0$. Accordingly, a large value of $\rho_0$ corresponds to a small density, whereas a small value of $\rho_0$ corresponds to a large density.

In the above, a particular method for determining the first density measure has been disclosed. However, the invention shall not be limited to this particular method, and also other methods that are readily apparent to the expert skilled in the art shall be comprised by the scope of the invention.

In step S207, for each of the $k$ nearest neighbors of the vector $v_0$, a second density measure of the respective $k$ nearest neighbors of the respective neighbor of the vector $v_0$ is determined. In more detail, a second density measure $\rho_1$ for the $k$ nearest neighbors $c_{11},...,c_{1k}$ of the vector $s_1$, a second density measure $\rho_2$ for the $k$ nearest neighbors $c_{21},...,c_{2k}$ of the vector $s_2$, and so forth, and a second density measure $\rho_k$ for the $k$ nearest neighbors $c_{k1},...,c_{kk}$ of the vector $s_k$ are determined at this step.

It is to be noted that the second density *measures* $\rho_1$ through $\rho_k$ are determined in an analogous manner as the first density measure $\rho_0$ has been determined. For illustrative purposes, the determination of the second density measure $\rho_1$ for the $k$ nearest neighbors $c_{11},...,c_{1k}$ of the vector $s_1$ will be explained below in detail.

First, the center $o$ of the spatial distribution of vectors $c_{11}$ through $c_{1k}$ is determined. Assuming a half-Gaussian distribution of individual distances of vectors $c_{11}$ through $c_{1k}$, a standard deviation of these distances may be calculated via

$$\sigma(c_{11},...,c_{1k}) = \sqrt{\frac{d_E(o,c_{11})^2 + ... + d_E(o,c_{1k})^2}{k}}, \tag{7}$$

and the second density measure $\rho_1$ for the $k$ nearest neighbors $c_{11},...,c_{1k}$ of the vector $s_1$ is then given by

$$\rho_1 = \lambda \cdot \sigma(c_{11},...,c_{1k}), \tag{8}$$

where the parameter $\lambda$ is chosen identically for the determination of the first density measure $\rho_0$, the second density measure $\rho_1$ and all the remaining second density measures $\rho_2$ through $\rho_k$.

Based on the first density measure $\rho_0$ and the second density measures $\rho_1$ through $\rho_k$, in step S208 the probability that the sample set $v_0$ is an outlier with respect to the pre-stored sets $v_1$ through $v_n$ is determined.

As stated above, the particular choice of $k$ is expected to have little or no impact on the determined probability that the sample set $v_0$ is an outlier with respect to the pre-stored sets $v_1$ through $v_n$. Full independence of the determined probability from the choice of $k$ may be ensured by the following strategy: The probability that the sample set $v_0$ is an outlier with respect to the pre-stored sets $v_1$ through $v_n$ is determined for different choices of $k$, e.g. for the four choices $k = \{2,5,10,20\}$, and the minimum probability that is determined in this manner is chosen as a final result for the probability that the sample set $v_0$ is an outlier with respect to the pre-stored sets $v_1$ through $v_n$. By employing this strategy, the level of sensitivity is maintained, while at the same time robustness against false alarms is enhanced. The reason for the advantageous effects of the above strategy is that a true outlier would be detected for all values of $k$, while there is the chance that for a particular value of $k$ a sample set that is not an outlier would be detected as an outlier. Accordingly, the above strategy is devised to exclude false alarms that arise because of this chance.

In an alternative embodiment, a determination of the outlier probability is determined for different values of $k$ as discussed above, and additionally, the process is terminated once for a given $k$ the determined outlier probability does not exceed a predetermined threshold. In such a case, for appropriately chosen threshold, it can readily be concluded that the sample set $v_0$ is not an outlier with respect to the pre-stored sets $v_1$ through $v_n$.

**Fig. 3** illustrates step S208 of **Fig. 2** in more detail.

In step S301 a first measure $P_1(v_0)$ indicating a "degree of outlierness" of the sample set is determined from the first measure of density $\rho_0$ and the second measures of density $\rho_1$ through $\rho_k$. Therein, a degree of outlierness is understood as a quantity that is small if the sample set is not an outlier and that increases the more outlying the sample set is with respect to the pre-stored sets. Specifically, the first measure indicating a degree of outlierness $P_1(v_0)$ may be calculated via

$$P_1(v_0) = \frac{\rho_0}{\frac{1}{k}(\rho_1 + ... + \rho_k)}. \qquad (9)$$

In step S302, a second measure $P_2(v_0)$ indicating a degree of outlierness of the sample set $v_0$ is determined by subtracting an expected value of the first measure $P_1(v_0)$ indicating a degree of outlierness of the sample set $v_0$ from the first measure $P_1(v_0)$ indicating a degree of outlierness of the sample set $v_0$ itself. If the vectors $v_0$ through $v_n$ were uniformly distributed, the first measure $P_1(v_0)$ indicating a degree of outlierness of the sample set $v_0$ would yield 1. Therefore, the expected value of the first measure $P_1(v_0)$ indicating a degree of outlierness of the sample set $v_0$ is given by 1, and the second measure $P_2(v_0)$ indicating a degree of outlierness of the sample set $v_0$ is given by

$$P_2(v_0) = P_1(v_0) - 1. \qquad (10)$$

Herein, it is to be noted that values of $P_2(v_0)$ smaller than zero indicate that the sample set $v_0$ is not an outlier with respect to the pre-stores sets $v_1$ through $v_n$, while higher values indicate an increasing degree of outlierness of the sample set $v_0$.

A normalization of the second measure $P_2(v_0)$ indicating a degree of outlierness of the sample set $v_0$ such that the resulting quantity is independent of the particular distribution of pre-stored sets $v_1$ through $v_n$ is obtained in step S303. Therein, a third measure $P_3(v_0)$ indicating a degree of outlierness of the sample set $v_0$ is obtained by dividing the second measure $P_2(v_0)$ indicating a degree of outlierness of the sample set $v_0$ by an expected value of the second measure $P_2(v_0)$ indicating a degree of outlierness of the sample set $v_0$. Specifically, the expected value of the second measure $P_2(v_0)$ indicating a degree of outlierness of the sample set $v_0$ is obtained as outlined below.

First, second measures $P_2(v_1)$ through $P_2(v_n)$ are obtained, that would indicate the degree of outlierness of each of the pre-stored sets $v_1$ through $v_n$. The determination of theses second measures $P_2(v_1)$ through $P_2(v_n)$ proceeds in analogy to the determination of the second measure $P_2(v_0)$ indicating a degree of outlierness of the sample set $v_0$, with the difference that for the determination of $P_2(v1)$ the pre-stored set $v_1$ is assumed to take the place of the sample set $v_0$, and so forth. It is noted that second measures $P_2(v_1)$ through $P_2(v_n)$ only need to be determined once for a given plurality of pre-stored sets $v_1$ through $v_n$ and may be stored for further reference; accordingly, the second measures $P_2(v_1)$ through $P_2(v_n)$ may have been stored previously and may be read in at this step.

Second, a standard deviation of these second measures $P_2(v_1)$ through $P_2(v_n)$ is obtained via

$$\sqrt{\frac{P_2(v_1)^2 + ... + P_2(v_n)^2}{n}} \, , \quad\quad\quad (11)$$

wherein the fact has been used that for a uniform distribution of pre-stored sets $v_1$ through $v_n$ each of the second measures $P_2(v_1)$ through $P_2(v_n)$ would be zero.

Third, the expected value of the second measure $P_2(v_0)$ indicating a degree of outlierness of the sample set $v_0$ is obtained by scaling the above standard deviation with the parameter $\lambda$. It is important to note that the expected value of the second measure $P_2(v_0)$ indicating a degree of outlierness of the sample set $v_0$ may be determined in advance, based on the pre-stored sets alone, such that no computational resources for its determination are needed during the actual monitoring of the system.

Finally, the third measure $P_3(v_0)$ indicating a degree of outlierness of the sample set $v_0$ is obtained via

$$P_3(v_0) = \frac{P_2(v_0)}{\lambda \cdot \sqrt{\dfrac{P_2(v_1)^2 + ... + P_2(v_n)^2}{n}}} \, . \quad\quad\quad (12)$$

By virtue of this normalization, third measures $P_3(v_0)$ indicating a degree of outlierness of a sample set $v_0$ that have been obtained based on different pluralities of pre-stored sets or that relate to different parameters, may be compared to each other in a meaningful way. In other words, after the above normalization, the particular distribution of the pre-stored sets $v_1$ through $v_n$ has no impact on the third measure $P_3(v_0)$ indicating a degree of outlierness of the sample set $v_0$.

In step S304, an outlier probability $P_0(v_0)$ is determined by mapping the third measure $P_3(v_0)$ indicating a degree of outlierness of the sample set $v_0$ to the numerical range from 0 to 1. To this end, the third measure $P_3(v_0)$ indicating a degree of outlierness of the sample set $v_0$ divided by $\sqrt{2}$ is input to the error function *erf*, and negative values are excluded by the following definition

$$P_0(v_0) = \max\left\{0, erf\left(\frac{P_3(v_0)}{\sqrt{2}}\right)\right\}. \quad\quad\quad (13)$$

The above outlier probability $P_0(v_0)$ corresponds to the above probability that the sample set is an outlier with respect to the pre-stored sets. Values of $P_0(v_0)$ close to zero indicate that the sample set $v_0$ lies in a region in which the pre-stored sets have a high local density, while values close to one indicate that the sample set $v_0$ is a density-based outlier.

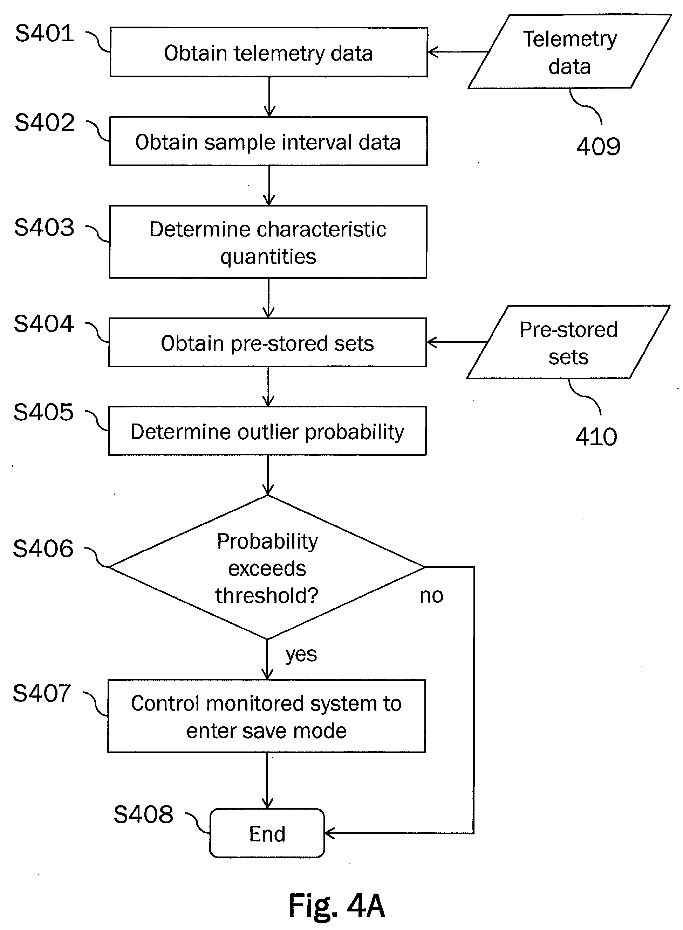

**Fig. 4A** shows an alternative embodiment of the present invention. Features of the method that are not discussed with respect to the present embodiment are identical to those of the embodiment described with reference to **Fig. 1.** Steps S401 to S405 correspond to steps S101 to S105 of **Fig. 1.** By contrast to the embodiment of **Fig. 1,** in step S406 a determination is performed whether the determined outlier probability exceeds a predetermined threshold, which may be different from the threshold of step S106 in **Fig. 1.** If the determined outlier probability does not exceed the predetermined threshold, the method ends at step S408. On the other hand, if the determined outlier probability exceeds the predetermined threshold, the method proceeds to step S407 in which the monitored system is controlled to enter a 'safe mode', e.g. by issuing a command to the monitored system via radio. If a spacecraft or a robot is controlled to enter the 'safe mode', it performs measures to ensure sufficient energy supply and to ensure availability for receiving further commands from the monitoring site and/or a control site. Specifically, the spacecraft or robot points its solar panels towards the sun (if the spacecraft or robot is equipped with solar panels and if the sun is in view of the spacecraft or robot) to ensure sufficient power supply and to charge its batteries. Furthermore, the spacecraft or robot points its antenna(e) for receiving signals towards earth, so as to be able to surely receive future transmissions from the monitoring site and/or the control site. Finally, the spacecraft or robot suspends execution of its scientific program and of other processes that are not essential for operation of the spacecraft or robot. By these measures, the chances that the spacecraft or robot may be saved if the novel behavior indicated by the determined outlier probability turns out to relate to a malfunction, are maximized.

In order to avoid unnecessary controlling of the system to enter the 'safe mode', a list summarizing expected novel behavior may be provided, wherein the list may comprise e.g. sets of characteristic quantities indicating expected novel behavior. Then, if it is determined in step S406 that the determined probability exceeds the threshold probability, it is checked whether the sample set of characteristic quantities on the basis of which the probability was determined, is comprised by the list summarizing expected novel behavior. If yes, the system is exceptionally not controlled to enter the 'safe mode'.

It is understood that according to another embodiment of the invention, the method according the above embodiment described with reference to **Fig. 4A** may be combined with the method according to the embodiment described with reference to **Fig. 1.** Accordingly, the method may comprise comparing the determined probability to a predetermined threshold probability, and if the determined probability exceeds the predetermined threshold probability, issuing a message as described with reference to **Fig. 1** and additionally controlling the system to enter the 'safe mode' as described with reference to Fig. **4A.**

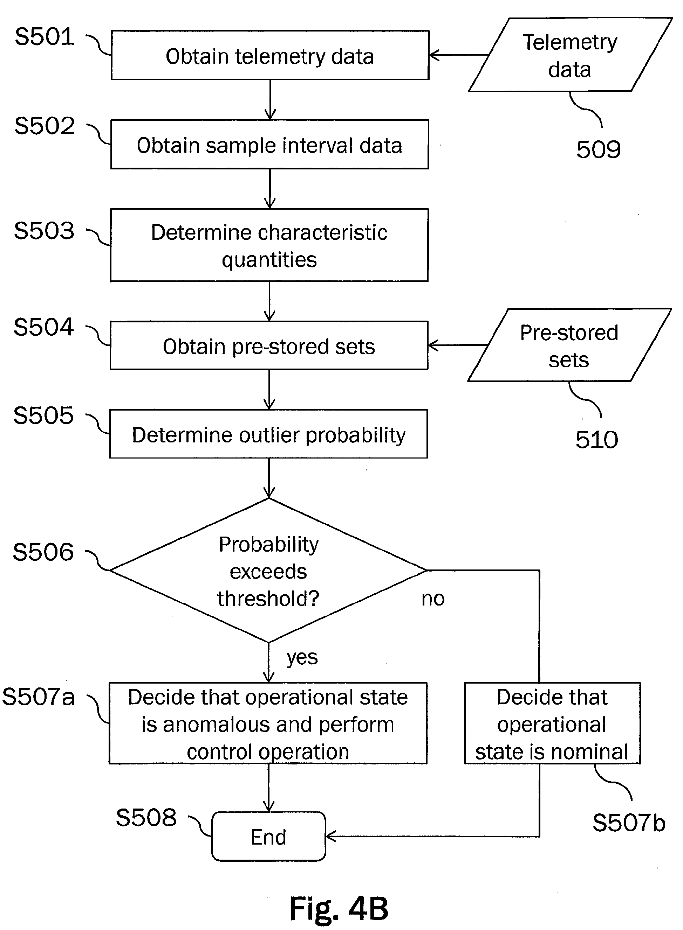

**Fig. 4B** shows another alternative embodiment of the present invention. Steps S501 to S505 correspond to steps S101 to S105 of **Fig. 1.** By contrast to the embodiment of **Fig. 1,** in step S506 a determination is performed whether the determined outlier probability exceeds a predetermined threshold, which may be different from the threshold of step S106 in **Fig. 1.** If the determined outlier probability does not exceed the predetermined threshold, it is decided in step S507b that the operational state of the system is a nominal operation state, and the method ends at step S508. If on the other hand the determined outlier probability exceeds the predetermined threshold, it is determined that the operational state of the system is a novel operation state in step S507a. Additionally, a control operation of the system may be performed, based on the parameter that was determined to relate to the anomaly. Alternatively, operating personnel may be prompted to perform a control operation. Features of the method that are not discussed with respect to the present embodiment are identical to those of the embodiment described with reference to **Fig. 1.**

It is understood that according to another embodiment of the invention, the method according the above embodiment described with reference to **Fig. 4B** may be combined with the method according to the embodiment described with reference to **Fig. 1.** Accordingly, the method may comprise comparing the determined probability to a predetermined threshold probability, and if the determined probability exceeds the predetermined threshold probability, issuing a message as described with reference to **Fig. 1,** determining that the operational state of the system is a novel operation state and optionally controlling the system on the basis of the parameter that was determined to relate to the anomaly. If the determined outlier probability does not exceed the predetermined threshold, it is decided that the operational state of the system is a nominal operation state. Features of the method that are not discussed with respect to the present embodiment are identical to those of the embodiment described with reference to **Fig. 1.**

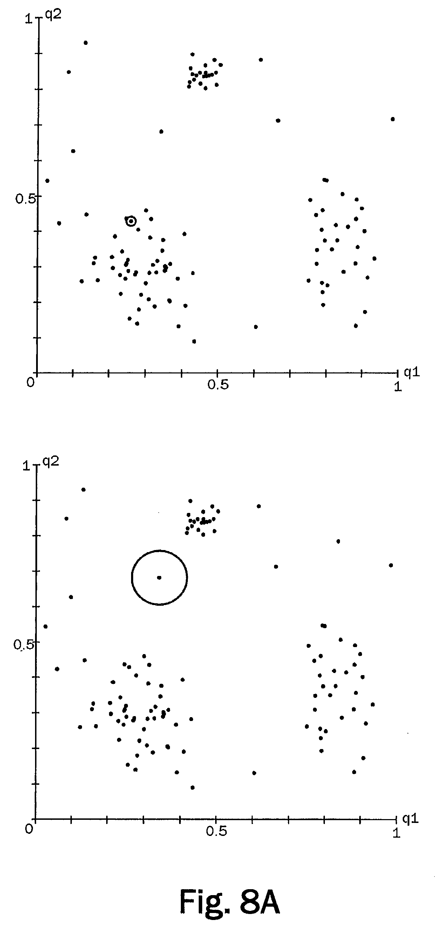

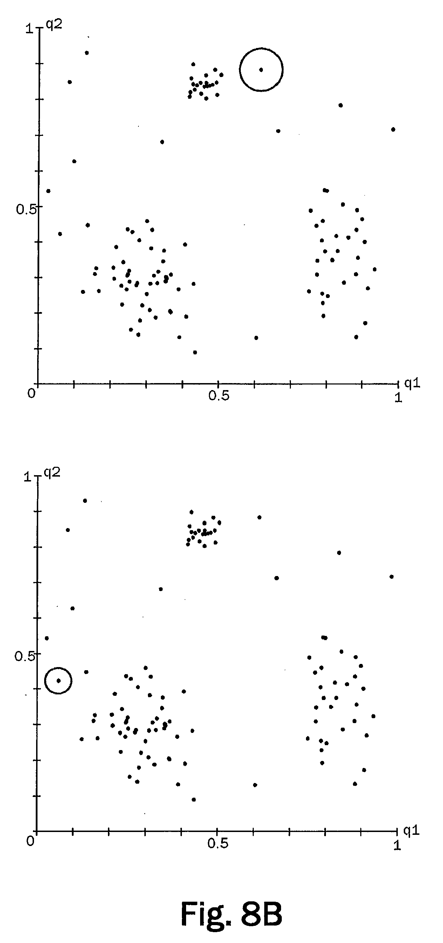

**Figs. 8A** and **8B** illustrate outlier probabilities determined according to the above inventive method for four exemplary sets of characteristic quantities. **Figs. 8A** and **8B** are based on a figure taken from Kriegel, H.-P. et al., "LoOP: Local Outlier Probabilities", CIKM'09, November 2-6, 2009, Hong Kong, China, wherein this figure has been adapted to the special application of the present invention.

For illustrative purposes, two characteristic quantities have been considered, that are, for simplicity, denoted q1 and q2. In each of the four panels of **Figs. 8A** and **8B,** a sample set is indicated by a black dot with a circle centered on the dot. The radius of the circle corresponds to a size of the probability that the respective sample set is an outlier with respect to a plurality of pre-stored sets of characteristic quantities. In each of the four panels, pre-stored sets of characteristic quantities are indicated by black dots not marked by a circle. By virtue of the inventive method sample sets lying close to areas populated by pre-stored sets have low outlier probabilities, while sample sets lying far from areas populated by pre-stored sets have high outlier probabilities. This is illustrated by the panels of **Fig. 8A.** The upper panel of **Fig. 8A** shows a sample set that lies in an area in the exemplary (q1,q2)-plane that is densely populated by pre-stored sets. Accordingly, the probability that this sample set is an outlier with respect to the pre-stored sets is small, as is indicated by the small radius of the circle centered on the sample set. Specifically, the probability that the sample set is an outlier is found to be 0.13, or 13%. The lower panel of **Fig. 8A** shows a sample set that lies far from areas populated by pre-stored sets in the exemplary (q1, q2)-plane. Accordingly, the probability that this sample set is an outlier with respect to the pre-stored sets is large, as is indicated by the large radius of the circle centered on the sample set. Specifically, the probability that the sample set is an outlier is found to be 0.76, or 76%.

Furthermore, due to the above-described normalization of the outlier probability, sample sets that are spaced by a given distance from an area densely populated by pre-stored sets have a higher outlier probability than sample sets that are spaced by the given distance from an area sparsely populated by pre-stored sets. This is illustrated by the panels of **Fig. 8B.** The upper panel of **Fig. 8B** shows a sample set that spaced apart by a given distance from an area in the exemplary (q1,q2)-plane that is densely populated by pre-stored sets. The lower panel of **Fig. 8B** shows a sample set that lies spaced apart by a similar distance from an area the exemplary (q1,q2)-plane that is less densely populated. Accordingly, the probability that the sample set in the lower panel of **Fig. 8B** is an outlier is smaller than the probability that the sample set in the upper panel of **Fig. 8B** is an outlier, as is indicated by the different radii of the circles centered on the sample sets in the upper and lower panels of **Fig. 8B.** Specifically, the probability that the sample set in the upper panel is an outlier is found to be 0.59, or 59%, whereas the probability that the sample set in the lower panel is an outlier is found to be 0.36, or 36%.

As can be seen from the above discussion of **Figs.** 8A and **8B,** density fluctuations of the pre-stored sets are duly taken into account by the inventive method. Thus, unlike in prior art methods that do not take into account the density distribution of nominal behavior (corresponding to the pre-stored sets in the present invention), the present invention triggers less false alarms that might be caused by sample sets lying in the vicinity of sparsely populated nominal areas, and it is at the same time more sensitive to novel behavior indicated by sample sets lying in the vicinity of densely populated nominal areas.

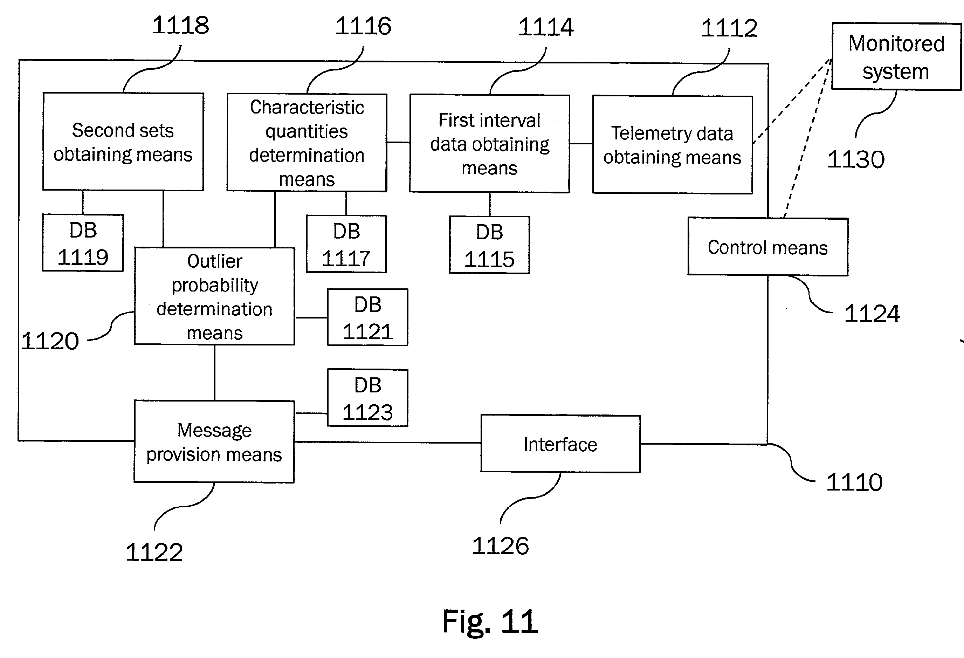

It is understood that the above described method steps may be implemented by appropriately chosen data processing equipment. **Fig. 11** schematically illustrates a specific monitoring/surveillance apparatus 1110 for carrying out the inventive method. Therein, the monitoring/surveillance apparatus is, without intended limitation, illustrated as part of a monitoring/surveillance system comprising the monitoring/surveillance apparatus 1110 and a system providing telemetry data 1130. As is indicated by the dashed line, the system providing telemetry data 1130 (i.e. the monitored system) provides telemetry data to the monitoring/surveillance apparatus 1110 e.g. via radio transmission or the like. The monitored system 1130 may for instance relate to a spacecraft or a robot, or to equipment aboard a spacecraft or a robot. The spacecraft may for instance relate to a satellite or a space probe, and the robot may for instance relate to a planetary rover, such as a Mars rover. The monitoring/surveillance apparatus 1110 is equipped with a telemetry data obtaining means 1112 configured to obtain the telemetry data. Although indicated by the dashed line between the monitoring/surveillance apparatus 1110 and the monitored system 1130, the telemetry data may be provided to the monitoring/surveillance apparatus 1110 via alternative routes e.g. the telemetry data may be relayed by relay stations, or the telemetry data may be buffered by appropriate storage means. Also, the invention shall not be limited to radio transmission of the telemetry data.

The telemetry data obtaining means 1112 stands in connection with a first interval data obtaining means 1114 configured to obtain first interval data from the telemetry data. Specifically, the first interval data obtaining means is configured to extract data relating to a particular parameter of the monitored system 1130 comprised by the telemetry data and to a time interval of a predetermined duration from the telemetry data. The particular parameter and/or the predetermined duration may be stored in a database 1115 and read from the database 1115 by the first interval data obtaining means 1114.

The first interval data obtaining means 1114 is in connection with a characteristic quantities determination means 1116 configured to determine one or more characteristic quantities of the first interval data obtained by the first interval obtaining means 1114. A database 1117 storing a list of characteristic quantities to be determined may be connected to the characteristic quantities determination means 1116. The characteristic quantities determination means 1116 may be particularly configured to determine statistical quantities relating to the first interval data, as described with reference to **Fig. 1.** The characteristic quantities determined by the characteristic quantities determination means 1116 are output by the characteristic quantities determination means 1116 as a first set of characteristic quantities.

The monitoring/surveillance apparatus 1110 further comprises a second sets obtaining means 1118 configured to obtain a plurality of second sets of characteristic quantities. The plurality of second sets of characteristic quantities may be stored in a database 1119 which is in connection with the second sets obtaining means 1118.

Both the characteristic quantities determination means 1116 and the second sets obtaining means 1118 are in connection with an outlier probability determination means 1120 configured to determine a probability that the first set of characteristic quantities is an outlier with respect to the plurality of second sets of characteristic quantities. Herein the term "outlier" is understood in the statistical sense. Moreover, the determination of the outlier probability is understood to be based on a local density of the plurality of second sets of characteristic quantities. The outlier probability determination means 1120 is further configured to compare the determined outlier probability to a threshold probability. The threshold probability may be held in a database 1121 which is connected to the outlier probability determination means 1120. Alternatively, a separate comparing means configured to compare the determined outlier probability to a threshold probability may be provided, and the database 1121 may be connected to the comparing means.

If the determined outlier probability is found to exceed the threshold probability, a message as described with reference to **Fig. 1** is issued by a message providing means 1122 which is configured to provide a message indicating at least one of the time interval and the particular parameter of the monitored system 1130. According to an embodiment of the present invention, the message comprises the parameter (the name of the parameter) according to which the sample interval data was obtained. In another embodiment of the invention, the message comprises the time interval according to which the sample interval data was obtained. In another embodiment, the message comprises the parameter (the name of the parameter) according to which the sample interval data was obtained and the time interval according to which the sample interval data was obtained. In another embodiment, the message comprises the sample interval data, optionally the parameter (the name of the parameter) and optionally the time interval. In another embodiment of the invention, the message additionally comprises the determined probability. In another embodiment of the invention, the message in addition to at least one of the above mentioned elements comprises the values of the determined characteristic quantities relating to the sample interval data. Further messages comprising combinations of some or all of the above-listed elements are considered to be within the scope of the invention.

The above message indicating that the determined probability exceeds the threshold probability may be displayed on a screen. Alternatively, or in addition, the message may be printed by a printer. Further alternatively, or in addition, the message may be stored to database 1123, which is in connection with the message provision means 1122. In this case, a notification that the message has been stored in the database may be issued. This notification may relate to any of, or combinations of, a visible alarm, an audible alarm, a notification via Short Message Service (SMS), a notification via e-mail and/or a notification on a website. Accordingly, the message provision means 1122 is understood to be capable of carrying out the above tasks.

Additionally, the monitoring/surveillance apparatus 1110 may comprise control means 1124 configured to control the monitored system 1130 e.g. by issuing commands to the monitored system 1130 via radio. According to an embodiment of the invention, the control means 1124 is configured to control the monitored system 1130 to enter the 'safe mode' discussed above with reference to **Fig. 4A.** According to another embodiment, the control means 1124 is configured to perform control of the monitored system 1130 as discussed above with reference to **Fig. 4B.**

Moreover, the monitoring/surveillance apparatus 1110 comprises an interface 1126 through which commands may be entered to the monitoring/surveillance apparatus 1110 and from which additional information may be output.

Features, components and specific details of the structures of the above-described embodiments may be exchanged or combined to form further embodiments optimized for the respective application. As far as those modifications are readily apparent for an expert skilled in the art, they shall be implicitly disclosed by the above description of preferred embodiments and examples without specifying explicitly every possible combination, for the sake of conciseness of the present description.

**Claims**

1. A method for monitoring an operational state of a system on the basis of telemetry data, wherein the operational state is either a first state or a second state, the second state being a state different from the first state, and the telemetry data (109; 409; 509) comprises time series data of at least one parameter of the system indicating the operational state of the system (1130) over time,
the method comprising:

   obtaining first interval data indicating time series data of a parameter of the at least one parameter of the system (1130) relating to a time interval of a predetermined duration

   **characterized by**

   determining a plurality of characteristic quantities of the first interval data, the plurality of characteristic quantities determined at this step forming a first set of characteristic quantities, wherein the first set of characteristic quantities is arranged as a first tuple of characteristic quantities;
   obtaining a plurality of second sets of characteristic quantities (110; 410; 510) formed by the plurality of characteristic quantities, wherein the plurality of second sets of characteristic (110; 410; 510) quantities relate to the parameter of the at least one parameter of the system (1130) and to a plurality of time intervals of the predetermined duration during which the system (1130) was in the first state, wherein the plurality of second sets of characteristic quantities (110; 410; 510) are arranged as a plurality of second tuples of characteristic quantities; and
   determining a probability of the first set of characteristic quantities being an outlier with respect to the plurality of second sets of characteristic quantities,

   wherein determining the probability of the first set of characteristic quantities being an outlier with respect to the plurality of second sets of characteristic quantities comprises:

   determining, using a distance function indicating a separation between two given tuples of characteristic quantities, a first group of second tuples comprising a predetermined number of nearest neighbors of the first tuple;
   determining, using the distance function, a first density measure indicating an average density of the tuples of the first group of second tuples;
   determining, using the distance function, for each tuple in the first group of second tuples a second group of second tuples comprising the predetermined number of nearest neighbors of the respective tuple in the first group of second tuples;
   determining, using the distance function, for each second group of second tuples a second density measure indicating an average density of the tuples of the respective second group of second tuples; and

determining a probability of the first tuple being an outlier with respect to the plurality of second tuples based on the first density measure and the second density measures.

2. The method according to claim 1, further comprising:

comparing the determined probability to a threshold probability; and
if the determined probability exceeds the threshold probability, providing a message indicating at least one of the time interval and the parameter of the at least one parameter of the system (1130).

3. The method according to claim 1, further comprising:

comparing the determined probability to a threshold probability; and
if the determined probability exceeds the threshold probability, controlling the system (1130) to enter a 'safe mode'.

4. The method according to at least one of the preceding claims, wherein the plurality of characteristic quantities are statistical quantities.

5. The method according to at least one of the preceding claims, wherein the plurality of characteristic quantities comprise at least one of a time average of the parameter during the time interval, a standard deviation of the parameter during the time interval, a maximum value of the parameter during the time interval and a minimum value of the parameter during the time interval.

6. The method according to at least one of the preceding claims, wherein the first density measure is based on a plurality of distances between the tuples of the first group of second tuples and the first tuple, the distances being determined by using the distance function; and
the second density measure is based on a plurality of distances between the tuples of the respective second group of second tuples and the respective tuple of the first group of second tuples, the distances being determined by using the distance function.

7. The method according to at least one of the preceding claims, further comprising: determining a third density measure indicating an average density of the plurality of second tuples of characteristic quantities, wherein the step of determining the probability of the first tuple being an outlier with respect to the plurality of second tuples is based on the first density measure, the second density measures and the third density measure.

8. The method according to one of the preceding claims, further comprising:

obtaining first state time series data of the parameter of the at least one parameter of the system (1130) relating to a time period during which the system was in the first state;
dividing the first state time series data into a plurality of time intervals of the predetermined duration;
determining, for each of the plurality of intervals, the plurality of characteristic quantities, the plurality of characteristic quantities determined at this step for each of the plurality of intervals forming a first state set of characteristic quantities;
using the plurality of first state sets of characteristic quantities as the plurality of second sets of characteristic quantities (110; 410; 510).

9. The method according to at least one of the preceding claims, further comprising the step of adding the first set of characteristic quantities to the plurality of second sets of characteristic quantities (110; 410; 510) if it is decided that the system (1130) was in the first state during the time interval.

10. The method according to at least one of the preceding claims, wherein the method is carried out for each parameter of the at least one parameter of the system (1130) indicating an operational state of the system (1130).

11. The method according to at least one of the preceding claims, further comprising: deciding, based on the determined probability whether the system (1130) during the time interval was in the second state or in the first state, wherein deciding whether the system (1130) during the time interval was in the second state or in the first state comprises comparing the determined probability to a second threshold probability.

**12.** The method according to at least one of the preceding claims, wherein the monitored system (1130) is one of a spacecraft, equipment aboard a spacecraft, a robot or equipment aboard a robot.

**13.** An apparatus for monitoring an operational state of a system on the basis of telemetry data, wherein the operational state is either a first state or a second state, the second state being a state different from the first state, and the telemetry data (109; 409; 509) comprises time series data of at least one parameter of the system (1130) indicating the operational state of the system (1130) over time,
the apparatus (1110) comprising:

means (1114) for obtaining first interval data indicating time series data of a parameter of the at least one parameter of the system relating to a time interval of a predetermined duration,

**characterized by**

means (1116) for determining a plurality of characteristic quantities of the first interval data, the plurality of characteristic quantities determined at this step forming a first set of characteristic quantities, wherein the first set of characteristic quantities is arranged as a first tuple of characteristic quantities;
means (1118) for obtaining a plurality of second sets of characteristic quantities (110; 410; 510) formed by the plurality of characteristic quantities, wherein the plurality of second sets of characteristic quantities (110; 410; 510) relate to the parameter of the at least one parameter of the system (1130) and to a plurality of time intervals of the predetermined duration during which the system (1130) was in the first state, wherein the plurality of second sets of characteristic quantities (110; 410; 510) are arranged as a plurality of second tuples of characteristic quantities; and
means (1120) for determining a probability of the first set of characteristic quantities being an outlier with respect to the plurality of second sets of characteristic quantities,

wherein the means (1120) for determining the probability of the first set of characteristic quantities being an outlier with respect to the plurality of second sets of characteristic quantities (110; 40; 510) comprises:

means for determining, using a distance function indicating a separation between two given tuples of characteristic quantities, a first group of second tuples comprising a predetermined number of nearest neighbors of the first tuple;
means for determining, using the distance function, a first density measure indicating an average density of the tuples of the first group of second tuples;
means for determining, using the distance function, for each tuple in the first group of second tuples a second group of second tuples comprising the predetermined number of nearest neighbors of the respective tuple in the first group of second tuples;
means for determining, using the distance function, for each second group of second tuples a second density measure indicating an average density of the tuples of the respective second group of second tuples;
means for determining a probability of the first tuple being an outlier with respect to the plurality of second tuples based on the first density measure and the second density measures.

**14.** A monitoring system comprising the apparatus as defined in claim 13 and a system providing telemetry data, the telemetry data (109; 409; 509) comprising time series data of at least one parameter of the system (1130) indicating an operational state of the system (1130) over time.

**Patentansprüche**

**1.** Verfahren zum Überwachen eines Betriebszustands eines Systems auf der Grundlage von Telemetriedaten, wobei der Betriebszustand entweder ein erster Zustand oder ein zweiter Zustand ist, wobei der zweite Zustand ein anderer Zustand als der erste Zustand ist und die Telemetriedaten (109; 409; 509) Zeitreihendaten von mindestens einem Parameter des Systems umfassen, der den Betriebszustand des Systems (1130) im Verlauf der Zeit angibt, wobei das Verfahren folgenden Schritt umfasst:

Erzielen von ersten Intervalldaten, die Zeitreihendaten eines Parameters des mindestens einen Parameters des Systems (1130) mit Bezug auf ein Zeitintervall einer vorbestimmten Dauer angeben,

**gekennzeichnet durch** folgende Schritte:

Bestimmen einer Vielzahl von Kenngrößen der ersten Intervalldaten, wobei die Vielzahl von Kenngrößen, die in diesem Schritt bestimmt wird, einen ersten Satz von Kenngrößen bildet, wobei der erste Satz von Kenngrößen als ein erstes Tupel von Kenngrößen angeordnet ist;

Erzielen einer Vielzahl von zweiten Sätzen von Kenngrößen (110; 410; 510), die **durch** die Vielzahl von Kenngrößen gebildet wird, wobei sich die Vielzahl von zweiten Sätzen von Kenngrößen (110; 410; 510) auf den Parameter des mindestens einen Parameters des Systems (1130) und auf eine Vielzahl von Zeitintervallen der vorbestimmten Dauer, während der sich das System (1130) in dem ersten Zustand befand, bezieht, wobei die Vielzahl von zweiten Sätzen von Kenngrößen (110; 410; 510) als eine Vielzahl von zweiten Tupeln von Kenngrößen angeordnet ist; und

Bestimmen einer Wahrscheinlichkeit, dass der erste Satz von Kenngrößen im Verhältnis zu der Vielzahl von zweiten Sätzen von Kenngrößen ein Ausreißer ist,

wobei das Bestimmen der Wahrscheinlichkeit, dass der erste Satz von Kenngrößen im Verhältnis zu der Vielzahl von zweiten Sätzen von Kenngrößen ein Ausreißer ist, Folgendes umfasst:

Bestimmen, unter Verwendung einer Distanzfunktion, die eine Trennung zwischen zwei bestimmten Tupeln von Kenngrößen angibt, einer ersten Gruppe von zweiten Tupeln, die eine vorbestimmte Anzahl von nächsten Nachbarn des ersten Tupels umfasst;

Bestimmen, unter Verwendung der Distanzfunktion, einer ersten Dichtemessung, die eine durchschnittliche Dichte der Tupel der ersten Gruppe von zweiten Tupeln angibt;

Bestimmen, unter Verwendung der Distanzfunktion, für jedes Tupel in der ersten Gruppe von zweiten Tupeln einer zweiten Gruppe von zweiten Tupeln, welche die vorbestimmte Anzahl von nächsten Nachbarn des jeweiligen Tupels in der ersten Gruppe von zweiten Tupeln umfasst;

Bestimmen, unter Verwendung der Distanzfunktion, für jede zweite Gruppe von zweiten Tupeln einer zweiten Dichtemessung, die eine durchschnittliche Dichte der Tupel der jeweiligen zweiten Gruppe von zweiten Tupeln angibt; und

Bestimmen einer Wahrscheinlichkeit, dass das erste Tupel im Verhältnis zu der Vielzahl von zweiten Tupeln ein Ausreißer ist, basierend auf der ersten Dichtemessung und den zweiten Dichtemessungen.

2.  Verfahren nach Anspruch 1, ferner umfassend:

Vergleichen der bestimmten Wahrscheinlichkeit mit einer Schwellenwahrscheinlichkeit; und

wenn die bestimmte Wahrscheinlichkeit die Schwellenwahrscheinlichkeit überschreitet, Bereitstellen einer Nachricht, die mindestens eines von dem Zeitintervall und dem Parameter des mindestens einen Parameters des Systems (1130) angibt.

3.  Verfahren nach Anspruch 1, ferner umfassend:

Vergleichen der bestimmten Wahrscheinlichkeit mit einer Schwellenwahrscheinlichkeit; und

wenn die bestimmte Wahrscheinlichkeit die Schwellenwahrscheinlichkeit überschreitet, Steuern des Systems (1130), um in einen "sicheren Modus" einzutreten.

4.  Verfahren nach mindestens einem der vorhergehenden Ansprüche, wobei die Vielzahl von Kenngrößen statistische Größen sind.

5.  Verfahren nach mindestens einem der vorhergehenden Ansprüche, wobei die Vielzahl von Kenngrößen mindestens eines von einem Zeitdurchschnitt des Parameters während des Zeitintervalls, einer Standardabweichung des Parameters während des Zeitintervalls, einem Höchstwert des Parameters während des Zeitintervalls und einem Mindestwert des Parameters während des Zeitintervalls umfasst.

6.  Verfahren nach mindestens einem der vorhergehenden Ansprüche, wobei die erste Dichtemessung auf einer Vielzahl von Distanzen zwischen den Tupeln der ersten Gruppe von zweiten Tupeln und dem ersten Tupel basiert, wobei die Distanzen unter Verwendung der Distanzfunktion bestimmt werden; und

die zweite Dichtemessung auf einer Vielzahl von Distanzen zwischen den Tupeln der jeweiligen zweiten Gruppe von zweiten Tupeln und dem jeweiligen Tupel der ersten Gruppe von zweiten Tupeln basiert, wobei die Distanzen unter Verwendung der Distanzfunktion bestimmt werden.

**7.** Verfahren nach mindestens einem der vorhergehenden Ansprüche, ferner umfassend:

Bestimmen einer dritten Dichtemessung, die eine durchschnittliche Dichte der Vielzahl von zweiten Tupeln von Kenngrößen angibt, wobei der Schritt des Bestimmens der Wahrscheinlichkeit, dass das erste Tupel im Verhältnis zu der Vielzahl von zweiten Tupeln ein Ausreißer ist, auf der ersten Dichtemessung, den zweiten Dichtemessungen und der dritten Dichtemessung basiert.

**8.** Verfahren nach einem der vorhergehenden Ansprüche, ferner umfassend:

Erzielen von Zeitreihendaten des ersten Zustands des Parameters des mindestens einen Parameters des Systems (1130) mit Bezug auf einen Zeitraum, während dessen sich das System in dem ersten Zustand befand;
Unterteilen der Zeitreihendaten des ersten Zustands in eine Vielzahl von Zeitintervallen der vorbestimmten Dauer;
Bestimmen, für jedes von der Vielzahl von Intervallen, der Vielzahl von Kenngrößen, wobei die Vielzahl von Kenngrößen, die in diesem Schritt für jedes von der Vielzahl von Intervallen bestimmt wird, einen Satz von Kenngrößen des ersten Zustands bildet;
Verwendung der Vielzahl von Sätzen von Kenngrößen des ersten Zustands als die Vielzahl von zweiten Sätzen von Kenngrößen (110; 410; 510).

**9.** Verfahren nach mindestens einem der vorhergehenden Ansprüche, ferner umfassend den Schritt des Hinzufügens des ersten Satzes von Kenngrößen zu der Vielzahl von zweiten Sätzen von Kenngrößen (110; 410; 510), wenn entschieden wird, dass sich das System (1130) während des Zeitintervalls in dem ersten Zustand befand.

**10.** Verfahren nach mindestens einem der vorhergehenden Ansprüche, wobei das Verfahren für jeden Parameter des mindestens einen Parameters des Systems (1130) ausgeführt wird, der einen Betriebszustand des Systems (1130) angibt.

**11.** Verfahren nach mindestens einem der vorhergehenden Ansprüche, ferner umfassend:

Entscheiden, basierend auf der bestimmten Wahrscheinlichkeit, ob sich das System (1130) während des Zeitintervalls in dem zweiten Zustand oder in dem ersten Zustand befand, wobei das Entscheiden, ob sich das System (1130) während des Zeitintervalls in dem zweiten Zustand oder in dem ersten Zustand befand, das Vergleichen der bestimmten Wahrscheinlichkeit mit einer zweiten Schwellenwahrscheinlichkeit umfasst.

**12.** Verfahren nach mindestens einem der vorhergehenden Ansprüche, wobei das überwachte System (1130) eines von einem Raumfahrzeug, einer Einrichtung an Bord eines Raumfahrzeugs, einem Roboter oder einer Einrichtung an Bord eines Roboters ist.

**13.** Gerät zum Überwachen eines Betriebszustands eines Systems auf der Grundlage von Telemetriedaten, wobei der Betriebszustand entweder ein erster Zustand oder ein zweiter Zustand ist, wobei der zweite Zustand ein anderer Zustand als der erste Zustand ist und die Telemetriedaten (109; 409; 509) Zeitreihendaten von mindestens einem Parameter des Systems (1130) umfassen, der den Betriebszustand des Systems (1130) im Verlauf der Zeit angibt, wobei das Gerät (1110) Folgendes umfasst:

Mittel (1114) zum Erzielen von ersten Intervalldaten, die Zeitreihendaten eines Parameters des mindestens einen Parameters des Systems mit Bezug auf ein Zeitintervall einer vorbestimmten Dauer angeben,

**gekennzeichnet durch**

Mittel (1116) zum Bestimmen einer Vielzahl von Kenngrößen der ersten Intervalldaten, wobei die Vielzahl von Kenngrößen, die in diesem Schritt bestimmt werden, einen ersten Satz von Kenngrößen bildet, wobei der erste Satz von Kenngrößen als ein erstes Tupel von Kenngrößen angeordnet ist;
Mittel (1118) zum Erzielen einer Vielzahl von zweiten Sätzen von Kenngrößen (110; 410; 510), die **durch** die Vielzahl von Kenngrößen gebildet wird, wobei sich die Vielzahl von zweiten Sätzen von Kenngrößen (110; 410; 510) auf den Parameter des mindestens einen Parameters des Systems (1130) und auf eine Vielzahl von Zeitintervallen der vorbestimmten Dauer, während der sich das System (1130) in dem ersten Zustand befand, beziehen, wobei die Vielzahl von zweiten Sätzen von Kenngrößen (110; 410; 510) als eine Vielzahl von zweiten Tupeln von Kenngrößen angeordnet ist; und

Mittel (1120) zum Bestimmen einer Wahrscheinlichkeit, dass der erste Satz von Kenngrößen im Verhältnis zu der Vielzahl von zweiten Sätzen von Kenngrößen ein Ausreißer ist,

wobei die Mittel (1120) zum Bestimmen der Wahrscheinlichkeit, dass der erste Satz von Kenngrößen im Verhältnis zu der Vielzahl von zweiten Sätzen von Kenngrößen (110; 40; 510) ein Ausreißer ist, Folgendes umfassen:

Mittel zum Bestimmen, unter Verwendung einer Distanzfunktion, die eine Trennung zwischen zwei bestimmten Tupeln von Kenngrößen angibt, einer ersten Gruppe von zweiten Tupeln, die eine vorbestimmte Anzahl von nächsten Nachbarn des ersten Tupels umfasst;

Mittel zum Bestimmen, unter Verwendung der Distanzfunktion, einer ersten Dichtemessung, die eine durchschnittliche Dichte der Tupel der ersten Gruppe von zweiten Tupeln angibt;

Mittel zum Bestimmen, unter Verwendung der Distanzfunktion, für jedes Tupel in der ersten Gruppe von zweiten Tupeln einer zweiten Gruppe von zweiten Tupeln, welche die vorbestimmte Anzahl von nächsten Nachbarn des jeweiligen Tupels in der ersten Gruppe von zweiten Tupeln umfasst;

Mittel zum Bestimmen, unter Verwendung der Distanzfunktion, für jede zweite Gruppe von zweiten Tupeln einer zweiten Dichtemessung, die eine durchschnittliche Dichte der Tupel der jeweiligen zweiten Gruppe von zweiten Tupeln angibt;

Mittel zum Bestimmen einer Wahrscheinlichkeit, dass das erste Tupel im Verhältnis zu der Vielzahl von zweiten Tupeln ein Ausreißer ist, basierend auf der ersten Dichtemessung und den zweiten Dichtemessungen.

14. Überwachungssystem, umfassend das Gerät nach Anspruch 13 und ein System zum Bereitstellen von Telemetriedaten, wobei die Telemetriedaten (109; 409; 509) Zeitreihendaten von mindestens einem Parameter des Systems (1130) umfassen, der einen Betriebszustand des Systems (1130) im Verlauf der Zeit angibt.

## Revendications

1. Procédé pour surveiller un état opérationnel d'un système sur la base de données de télémétrie, dans lequel l'état opérationnel est soit un premier état soit un second état, le second état étant un état différent du premier état, et les données de télémétrie (109 ; 409 ; 509) comprennent des données de série temporelle d'au moins un paramètre du système indiquant l'état opérationnel du système (1130) au cours du temps,
le procédé comprenant :

l'obtention de premières données d'intervalle indiquant des données de série temporelle d'un paramètre parmi l'au moins un paramètre du système (1130) concernant un intervalle temporel d'une durée prédéterminée,

**caractérisé par**

la détermination d'une pluralité de quantités caractéristiques des premières données d'intervalle, la pluralité de quantités caractéristiques déterminées à cette étape formant un premier ensemble de quantités caractéristiques, le premier ensemble de quantités caractéristiques étant agencé comme un premier n-uplet de quantités caractéristiques ;

l'obtention d'une pluralité de seconds ensembles de quantités caractéristiques (110 ; 410 ; 510) formés par la pluralité de quantités caractéristiques, la pluralité de seconds ensembles de quantités caractéristiques (110 ; 410 ; 510) concernant le paramètre parmi l'au moins un paramètre du système (1130) et une pluralité d'intervalles temporels de la durée prédéterminée durant lesquels le système (1130) était dans le premier état, la pluralité de seconds ensembles de quantités caractéristiques (110 ; 410 ; 510) étant agencés comme une pluralité de seconds n-uplets de quantités caractéristiques ; et

la détermination d'une probabilité que le premier ensemble de quantités caractéristiques soit une valeur aberrante par rapport à la pluralité de seconds ensembles de quantités caractéristiques,

dans lequel la détermination de la probabilité que le premier ensemble de quantités caractéristiques soit une valeur aberrante par rapport à la pluralité de seconds ensembles de quantités caractéristiques comprend :

la détermination, à l'aide d'une fonction de distance indiquant une séparation entre deux n-uplets donnés de quantités caractéristiques, d'un premier groupe de seconds n-uplets comprenant un nombre prédéterminé de voisins les plus proches du premier n-uplet ;

la détermination, à l'aide de la fonction de distance, d'une première mesure de densité indiquant une densité moyenne des n-uplets du premier groupe de seconds n-uplets ;

la détermination, à l'aide de la fonction de distance, pour chaque n-uplet dans le premier groupe de seconds n-uplets d'un second groupe de seconds n-uplets comprenant le nombre prédéterminé de voisins les plus proches du n-uplet respectif dans le premier groupe de seconds n-uplets ;

la détermination, à l'aide de la fonction de distance, pour chaque second groupe de seconds n-uplets d'une seconde mesure de densité indiquant une densité moyenne des n-uplets du second groupe respectif de seconds n-uplets ; et

la détermination d'une probabilité que le premier n-uplet soit une valeur aberrante par rapport à la pluralité de seconds n-uplets sur la base de la première mesure de densité et des secondes mesures de densité.

2. Procédé selon la revendication 1, comprenant en outre :

la comparaison de la probabilité prédéterminée à une probabilité de seuil ; et
si la probabilité déterminée dépasse la probabilité de seuil, la fourniture d'un message indiquant au moins un parmi l'intervalle temporel et le paramètre parmi l'au moins un paramètre du système (1130).

3. Procédé selon la revendication 1, comprenant en outre :

la comparaison de la probabilité déterminée à une probabilité de seuil ; et
si la probabilité déterminée dépasse la probabilité de seuil, la commande du système (1130) pour entrer dans un « mode sécurisé ».

4. Procédé selon au moins l'une des revendications précédentes, dans lequel la pluralité de quantités caractéristiques sont des quantités statistiques.

5. Procédé selon au moins l'une des revendications précédentes, dans lequel la pluralité de quantités caractéristiques comprennent au moins une parmi une moyenne temporelle du paramètre durant l'intervalle temporel, un écart-type du paramètre durant l'intervalle temporel, une valeur maximale du paramètre durant l'intervalle temporel et une valeur minimale du paramètre durant l'intervalle temporel.

6. Procédé selon au moins l'une des revendications précédentes, dans lequel la première mesure de densité est basée sur une pluralité de distances entre les n-uplets du premier groupe de seconds n-uplets et le premier n-uplet, les distances étant déterminées par utilisation de la fonction de distance ; et
la seconde mesure de densité est basée sur une pluralité de distances entre les n-uplets du second groupe respectif de seconds n-uplets et le n-uplet respectif du premier groupe de seconds n-uplets, les distances étant déterminées par utilisation de la fonction de distance.

7. Procédé selon au moins l'une des revendications précédentes, comprenant en outre : la détermination d'une troisième mesure de densité indiquant une densité moyenne de la pluralité de seconds n-uplets de quantités caractéristiques, dans lequel l'étape de détermination de la probabilité que le premier n-uplet soit une valeur aberrante par rapport à la pluralité de seconds n-uplets est basée sur la première mesure de densité, les secondes mesures de densité et la troisième mesure de densité.

8. Procédé selon l'une des revendications précédentes, comprenant en outre :

l'obtention de données de série temporelle de premier état du paramètre parmi l'au moins un paramètre du système (1130) concernant une période temporelle durant laquelle le système était dans le premier état ;
la division des données de série temporelle de premier état en une pluralité d'intervalles temporels de la durée prédéterminée ;
la détermination, pour chacun de la pluralité d'intervalles, de la pluralité de quantités caractéristiques, la pluralité de quantités caractéristiques déterminées à cette étape pour chacun de la pluralité d'intervalles formant un ensemble de premier état de quantités caractéristiques ;
l'utilisation de la pluralité d'ensembles de premier état de quantités caractéristiques en tant que pluralité de seconds ensembles de quantités caractéristiques (110 ; 410 ; 510).

9. Procédé selon au moins l'une des revendications précédentes, comprenant en outre l'étape d'ajout du premier ensemble de quantités caractéristiques à la pluralité de seconds ensembles de quantités caractéristiques (110 ; 410 ; 510) s'il est décidé que le système (1130) était dans le premier état durant l'intervalle temporel.

**10.** Procédé selon au moins l'une des revendications précédentes, dans lequel le procédé est réalisé pour chaque paramètre parmi l'au moins un paramètre du système (1130) indiquant un état opérationnel du système (1130).

**11.** Procédé selon au moins l'une des revendications précédentes, comprenant en outre : la décision, sur la base de la probabilité déterminée du point de savoir si le système (1130) durant l'intervalle temporel était dans le second état ou dans le premier état, dans lequel la décision du point de savoir si le système (1130) durant l'intervalle temporel était dans le second état ou dans le premier état comprend la comparaison de la probabilité déterminée à une seconde probabilité de seuil.

**12.** Procédé selon au moins l'une des revendications précédentes, dans lequel le système surveillé (1130) est un parmi un engin spatial, un équipement à bord d'un engin spatial, un robot ou un équipement à bord d'un robot.

**13.** Appareil pour surveiller un état opérationnel d'un système sur la base de données de télémétrie, dans lequel l'état opérationnel est soit un premier état soit un second état, le second étant un état différent du premier état, et les données de télémétrie (109 ; 409 ; 509) comprennent des données de série temporelle d'au moins un paramètre du système (1130) indiquant l'état opérationnel du système (1130) au cours du temps, l'appareil (1110) comprenant :

un moyen (1114) pour obtenir des premières données d'intervalle indiquant des données de série temporelle d'un paramètre parmi l'au moins un paramètre du système concernant un intervalle temporel d'une durée prédéterminée,

**caractérisé par**

un moyen (1116) pour déterminer une pluralité de quantités caractéristiques des premières données d'intervalle, la pluralité de quantités caractéristiques déterminées à cette étape formant un premier ensemble de quantités caractéristiques, le premier ensemble de quantités caractéristiques étant agencé comme un premier uplet de quantités caractéristiques ;
un moyen (1118) pour obtenir une pluralité de seconds ensembles de quantités caractéristiques (110 ; 410 ; 510) formés par la pluralité de quantités caractéristiques, la pluralité de seconds ensembles de quantités caractéristiques (110 ; 410 ; 510) concernant le paramètre parmi l'au moins un paramètre du système (1130) et une pluralité d'intervalles temporels de la durée prédéterminée durant lesquels le système (1130) était dans le premier état, la pluralité de seconds ensembles de quantités caractéristiques (110 ; 410 ; 510) étant agencés comme une pluralité de seconds n-uplets de quantités caractéristiques ; et
un moyen (1120) pour déterminer une probabilité que le premier ensemble de quantités caractéristiques soit une valeur aberrante par rapport à la pluralité de seconds ensembles de quantités caractéristiques,

dans lequel le moyen (1120) pour déterminer la probabilité que le premier ensemble de quantités caractéristiques soit une valeur aberrante par rapport à la pluralité de seconds ensembles de quantités caractéristiques (110 ; 40 ; 510) comprend :

un moyen pour déterminer, à l'aide d'une fonction de distance indiquant une séparation entre deux n-uplets donnés de quantités caractéristiques, un premier groupe de seconds n-uplets comprenant un nombre prédéterminé de voisins les plus proches du premier n-uplet ;
un moyen pour déterminer, à l'aide de la fonction de distance, une première mesure de densité indiquant une densité moyenne des n-uplets du premier groupe de seconds n-uplets ;
un moyen pour déterminer, à l'aide de la fonction de distance, pour chaque n-uplet dans le premier groupe de seconds n-uplets un second groupe de seconds n-uplets comprenant le nombre prédéterminé de voisins les plus proches du n-uplet respectif dans le premier groupe de seconds n-uplets ;
un moyen pour déterminer, à l'aide de la fonction de distance, pour chaque second groupe de seconds n-uplets une seconde mesure de densité indiquant une densité moyenne des n-uplets du second groupe respectif de seconds nuplets ;
un moyen pour déterminer une probabilité que le premier n-uplet soit une valeur aberrante par rapport à la pluralité de seconds n-uplets sur la base de la première mesure de densité et des secondes mesures de densité.

**14.** Système de surveillance comprenant l'appareil tel que défini à la revendication 13 et un système fournissant des données de télémétrie, les données de télémétrie (109 ; 409 ; 509) comprenant des données de série temporelle d'au moins un paramètre du système (1130) indiquant un état opérationnel du système (1130) au cours du temps.

| | |
|---|---|
| S101 | Obtain telemetry data ← Telemetry data |
| | 109 |
| S102 | Obtain sample interval data |
| S103 | Determine characteristic quantities |
| S104 | Obtain pre-stored sets ← Pre-stored sets |
| | 110 |
| S105 | Determine outlier probability |
| S106 | Probability exceeds threshold? |
| S107 | Issue message (yes) |
| S108 | End (no) |

**Fig. 1**

S201 — Arrange sample set of characteristic quantities as a vector $v_0$

S202 — Arrange pre-stored sets of characteristic quantities as vectors $v_1,...,v_n$

S203 — Form data set containing sample set and pre-stored sets

S204 — Determine nearest neighbors of sample set $S(v_0)=\{s_1,...,s_k\}$

S205 — Determine nearest neighbors of each nearest neighbor $C_1=\{c_{11},...,c_{1k}\}$, $C_2=\{c_{21},...,c_{2k}\}$,...,$C_k=\{c_{k1},...c_{kk}\}$

S206 — Determine a measure of density of the nearest neighbors of the sample set $\rho_0$

S207 — Determine a measure of density of the nearest neighbors of each nearest neighbor of the sample set $\rho_1,...,\rho_k$

S208 — Determine outlier probability based on measures of density $\rho_0,\rho_1,...,\rho_k$

# Fig. 2

S301 — Determine first measure indicating a degree of outlierness from measures of density $\rho_0, \rho_1, ..., \rho_k$

S302 — Determine second measure indicating a degree of outlierness by subtracting an expected value of the first measure from the first measure

S303 — Determine third measure indicating a degree of outlierness by dividing the second measure by an expected value of the second measure

S304 — Determine outlier probability by mapping the third measure to numerical range from 0 to 1

## Fig. 3

S401 — Obtain telemetry data ◄— Telemetry data

409

S402 — Obtain sample interval data

S403 — Determine characteristic quantities

S404 — Obtain pre-stored sets ◄— Pre-stored sets

410

S405 — Determine outlier probability

S406 — Probability exceeds threshold? — no

yes

S407 — Control monitored system to enter save mode

S408 — End

Fig. 4A

S501 — Obtain telemetry data ← Telemetry data

509

S502 — Obtain sample interval data

S503 — Determine characteristic quantities

S504 — Obtain pre-stored sets ← Pre-stored sets

510

S505 — Determine outlier probability

S506 — Probability exceeds threshold?

no

yes

S507a — Decide that operational state is anomalous and perform control operation

Decide that operational state is nominal — S507b

S508 — End

## Fig. 4B

Fig. 5

Fig. 6

EP 2 732 348 B1

Fig. 7

Fig. 8A

Fig. 8B

Fig. 9

EP 2 732 348 B1

Fig. 10

Fig. 11

**EP 2 732 348 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2284769 A1

**Non-patent literature cited in the description**

- **KRIEGEL, H.-P. et al.** *LoOP: Local Outlier Probabilities'',* 02 November 2009

- **KRIEGEL, H.-P. et al.** *LoOP: Local Outlier Probabilities,* 02 November 2009